# EUROPÄISCHE PATENTANMELDUNG

(11) **EP 1 445 635 A2**
(43) Veröffentlichungstag der Anmeldung: **11.08.2004**
(21) Anmeldenummer: 04000747.8
(22) Anmeldetag: 15.01.2004
(51) Int. Cl.: G02B 21/24

(54) **Einrichtung und Software zum Steuern von Funktionen eines Mikroskopsystems**

(30) Priorität: 07.02.2003 DE 10305117
(71) Anmelder: Leica Microsystems Wetzlar GmbH, 35578 Wetzlar (DE); Fraunhofer-Gesellschaft zur Förderung der angewandten Forschung e.V., 80636 München (DE)
(72) Erfinder: Peter, Katja, Dr., 35578 Wetzlar (DE); Toennissen, Frank, 46238 Bottrop (DE); Knoll, Christian, 70191 Stuttgart (DE); Kempf, Dietmar, 71101 Schönaich (DE)
(74) Vertreter: Reichert, Werner F. Dr. Dipl.-Phys.

(57) **Zusammenfassung**

Es ist eine Einrichtung zum Steuern von Funktionen eines Mikroskopsystems offenbart, wobei das Mikroskopsystem ein Stativbasisteil (3) umfasst. Im Stativbasisteil (3) ist ein zentrales Display (8) integriert. Das Display (8) hat ein Bedienmenü (20) und einen Informationsmodus (25) hinterlegt, wobei das Bedienmenü (20) aus einem ersten Bereich (211), einem zweiten Bereich (221) und einem dritten Bereich (222) aufgebaut ist. Im ersten Bereich (211) ist ein Hauptmenü (21), im zweiten Bereich (221) ist ein Untermenü (22) und im dritten Bereich (222) sind Informations- und Aktionselemente darstellbar, wobei der dritte Bereich (222) auf je einer Seite vom Hauptmenü (21) und dem Untermenü (22) eingegrenzt ist, und wobei im Informationsmodus (25) das gesamte Display (8) zur Darstellung verwendbar ist.

## Beschreibung

Die vorliegende Erfindung betrifft eine Einrichtung zum Steuern von Mikroskopfunktionen.

Ebenso betrifft die Erfindung eine Software zum Steuern von Mikroskopfunktionen

Das Nikon Eclipse E1000, das Olympus BX 61 und das Zeiss Axioskop 2FS sind im Wesentlichen Mikroskope, mit denen verschiedene Einstellungen vorgenommen werden können. Dem Benutzer sind bei all diesen Systemen die aktuellen Einstellungen und aktiven Komponenten nicht direkt ersichtlich. Der Benutzer muss alles einzeln prüfen. Aus den Einstellungen muss der Benutzer auf das aktuell verwendete Mikroskopierverfahren schließen. Abhängige Komponenten müssen an verschiedenen räumlich nicht in Beziehung stehenden Schaltern und Reglern aktiviert bzw. eingestellt und aufeinander abgestimmt werden. Abhängige Komponenten müssen einzeln aktiviert werden. Abhängige Komponenten werden nicht auf Kompatibilität überprüft, d. h. es erfolgt keine Plausibilitätsprüfung auf sinnvolle und funktionstüchtige Kombination von Systemkomponenten. Die Bedienreihenfolge ist nicht eindeutig und von der individuellen Vorgehensweise des Nutzers abhängig und muss erlernt werden. Die LCD- oder LED-Anzeige in den Mikroskopsystemen bieten keine Rückmeldung über kompatible Systemkomponenten bzw. sinnvolle Kombinationen. Bisher können bei den Mikroskopsystemen obere und untere Grenzen gesetzt werden und die Schrittweite für die Fokussierung in Abhängigkeit des gewählten Objektivs gesetzt werden. Die Einstellung erfolgt über Schalter und Anzeige der gewählten Werte am LCD- bzw. LED-Anzeige. Häufig verwendete Systemeinstellungen können nicht gespeichert werden.

Der Erfindung liegt daher die Aufgabe zugrunde, ein Mikroskopsystem zu schaffen, das die Probleme des Standes der Technik löst. Im besonderen ist es Aufgabe der Erfindung, ein Mikroskopsystem zu schaffen, das seinen Benutzer schnell über die Konfiguration und Einstellungen informiert und auch auf kompatible Einstellungen hinweist.

Die Aufgabe wird erfindungsgemäß gelöst durch die Merkmale des Anspruchs 1.

Eine weitere Aufgabe der Erfindung ist, eine Software zu schaffen, die zentral die Einstellungen vornimmt, dem Benutzer Informationen mitteilt und Unterstützung bei der Einstellung des Mikroskopsystems leistet. Ferner soll durch die Software die Bedienung des Mikroskopsystems erheblich erleichtert und benutzerfreundlich gestaltet sein.

Die Aufgabe wird erfindungsgemäß gelöst durch die Merkmale des Anspruchs 6.

Die Erfindung hat den Vorteil, dass eine interaktive Menüführung zur Steuerung aller wichtigen Mikroskopfunktionen vorgesehen ist. Die aktuellen Einstellungen, das Mikroskopierverfahren und die aktiven Komponenten werden dem Benutzer in einem Übersichtsmenü angezeigt. Die Wahl des Mikroskopierverfahrens und die Einstellung von Systemkomponenten erfolgt zentral am Display (Touchscreen). Die Einstellungen für ein Mikroskopierverfahren werden vom System weitgehend automatisiert ausgeführt und alle notwendigen Komponenten wie Objektiv, Filter, Prismen etc. werden automatisch in den Strahlengang gebracht und eingestellt. Gegebenfalls sind vom Benutzer noch Feineinstellungen an den aktiven Komponenten erforderlich (z. B. Orientierung von Prismen). Der Ablauf der Eingabefolge ist der Bedienreihenfolge der Benutzer nachempfunden. Individuelle Präferenzen bei der Bedienreihenfolge bleiben unberührt und können beibehalten werden. Vom Benutzer werden zur Einstellung eines bestimmten Mikroskopierverfahrens primär nur das entsprechende Verfahren und das gewünschte Objektiv gewählt. Dem Benutzer werden Hinweise über sinnvoll kombinierbare Komponenten des Systems gegeben. Alle im System zur Verfügung stehenden Mikroskopierverfahren bzw. Systemkomponenten werden angezeigt und können jederzeit ausgewählt und aktiviert werden. Der Benutzer kann entscheiden, welches Verfahren oder welche Systemkomponente er verwenden möchte, unabhängig davon, ob diese Komponente zu den aktuellen Systemeinstellungen kompatibel ist oder nicht. Bei der Wahl einer nicht kompatiblen Komponente wird der Benutzer darüber informiert und bei der weiteren Einstellung eines funktionstüchtigen Systemzustandes unterstützt. Die Memory-Funktion zur Speicherung von Systemeinstellungen für die verschiedenen Mikroskopierverfahren ermöglicht dem Benutzer die schnelle Aktivierung häufig verwendeter Mikroskopeinstellungen bzw. Mikroskopierverfahren. Alle erforderlichen Komponenten wie Objektiv, Filter, Prismen etc. werden automatisch in den Strahlengang gebracht. Die Fokusebene kann optional mit gespeichert werden. Die Memory-Funktion für die Tischposition in x- und y-Richtung ermöglicht die Speicherung verschiedener Bildausschnitte von relevanten Bereichen einer Probe. Sie ermöglicht das schnelle Wiederauffinden und Anfahren von Bereichen der Probe, die von besonderem Interesse sind.

Die Navigationsleisten ermöglichen jederzeit den Wechsel des Hauptmenüs, das wiederum durch die Reiter in Untermenüs gegliedert ist. Da die Buttons für die Unterhauptmenüs und die Reiter in den Untermenüs immer sichtbar bleiben, ist ein rasches Erfassen der aktuellen Position im Menü gewährleistet. Jede Werteveränderung (Manipulationen innerhalb eines Hauptmenüs) muss mit "OK" bestätigt werden, um Fehlbedienungen zu vermeiden. "BACK" ruft die zuletzt gesehenen 6 Seiten auf, während "UNDO" Werteveränderungen rückgängig macht, die schon mit "OK" bestätigt wurden.

Ein hohes Maß an Unabhängigkeit von den verschiedenen Sprachen wird durch den Einsatz von Piktogrammen und Symbolen erreicht, die zum Großteil neu entwickelt wurden. Ausgewählte und aktive Schalter oder Buttons werden zur leichten Erfassung des Betriebszustandes invertiert dargestellt.

Das Menü zeigt immer alle im System enthaltenen Optionen an, auch wenn diese aufgrund aktueller Betriebszustände nicht verfügbar sind. Solche Funktions-Buttons, deren Auswahl mit den aktuellen Betriebszuständen kompatibel sind, werden mit einem Dreieck im Button gekennzeichnet ("Auswahlempfehlung"). Das Menü ist in drei Hierarchieebenen aufgebaut, wobei die wichtigen Funktionen direkt in den Hauptmenüs zu finden sind. Die weiteren Menüebenen sind erforderlich, um bei bestimmten Funktionen weitere Parameter einstellen zu können, die zu deren Ausführung im Mikroskopsystem notwendig sind.

Weitere vorteilhafte Ausgestaltung der Erfindung können den Unteransprüchen entnommen werden.

Die Erfindung wird im folgenden anhand der in den Figuren schematisch dargestellten Beispiele verdeutlicht. Dabei zeigen:

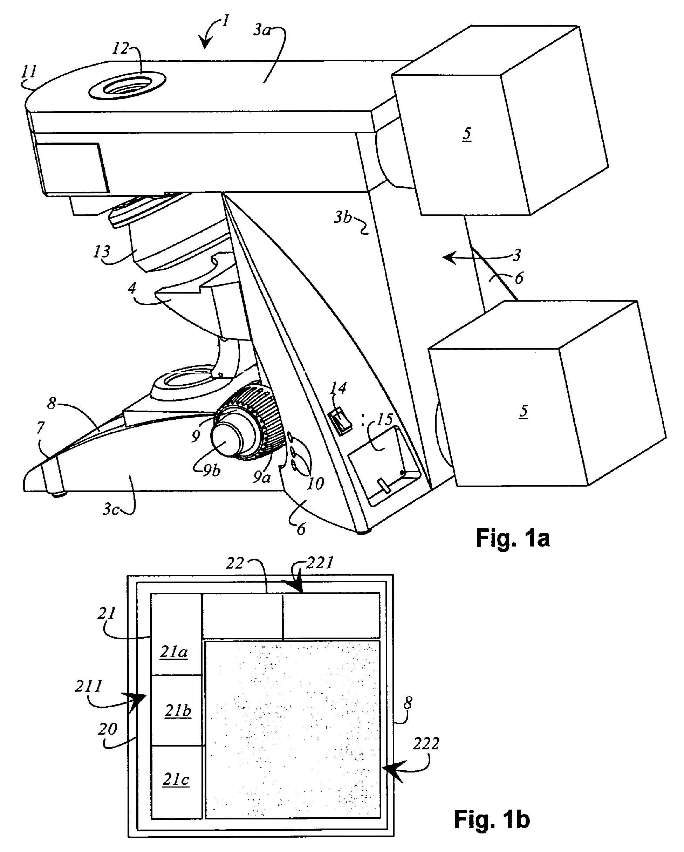

Fig. 1 a: eine perspektivische Ansicht eine Mikroskops, das die erfindungsgemäße Einrichtung umfasst,
Fig. 1 b: eine Detailansicht des in Stativ des Mikroskops vorgesehenen Displays, auf dem schematisch ein Bendienmenü dargestellt ist,
Fig. 2: eine graphische Darstellung einer der Steuerung des Mikroskops zugrundeliegenden Struktur aller Haupt- und Untermenüs,
Fig. 3: eine Darstellung der Eingansseite, die auf dem Display des Mikroskops dargestellt ist,
Fig. 4a: eine Setupanzeige zur Anzeige der generellen Einstellungen des Mikroskopsystems,
Fig. 4b eine Setupanzeige zur Anzeige der (nicht im Menü vorzunehmenden) Einstellungen für die Beleuchtung des Mikroskopsystems,
Fig. 4c eine Setupanzeige zur Anzeige der Belegung der Funktionsknöpfe auf der linken Seite des Stativs des Mikroskopsystems,
Fig. 4d eine Setupanzeige zur Anzeige der Belegung der Funktionsknöpfe auf der rechten Seite des Stativs des Mikroskopsystems,
Fig. 5a eine Darstellung des Kontrastmenüs für Durchlicht,
Fig. 5b eine Darstellung des Kontrastmenüs für Auflicht,
Fig. 5c eine Darstellung des Kontrastmenüs für spezielle Kontrastverfahren,
Fig. 5d eine Auswahl des Fluoreszenzmenüs, das über das Untermenü "Kontrastmenüs für Auflicht" erreichbar ist,
Fig. 5e eine Auswahl der Blenden im Fluoreszenzmenü,
Fig. 5f: eine Darstellung eines Kompatibilitätshinweises im Kontrastmenüs;
Fig. 5g: eine Darstellung einer kompatiblen Auswahl im Kontrastmenü;
Fig. 6a: eine Darstellung des Objektivmenüs für Trocken-Objektive;
Fig. 6b: eine Darstellung des Objektivmenüs für Immersions-Objektive;
Fig. 6c: eine Darstellung des Objektivmenüs für die Nachvergrößerung bezüglich des Kameraports;
Fig. 6d: eine Darstellung des Objektivmenüs für die Nachvergrößerung bezüglich des Okularports;
Fig. 6e: eine Darstellung eines Kompatibilitätshinweises im Objektivmenü;
Fig. 6f: eine Darstellung einer kompatiblen Auswahl im Objektivmenü;
Fig. 7a: eine Darstellung des Portmenüs mir der Einstellung des aktuell eingestellten Betrachtungsausganges;
Fig. 7b: eine Darstellung, wenn Portmenü "LCD OFF" gedrückt worden ist;
Fig. 8a: eine Darstellung der Eingangsseite zu den Speicherfunktionen;
Fig. 8b: eine Darstellung einer Sicherheitsabfrage, die belegte Speicherplätze vor Überschreiben schützt;
Fig. 8c: eine Darstellung einer Sicherheitsabfrage, die dem Benutzer freie Speicherplätze anzeigt;
Fig. 8d: eine Darstellung des Speichermenüs mit der Anzeige der gespeicherten x/y Positionen des Tisches;
Fig. 8e: eine Darstellung des Speichermenüs zum Speichern einer Fokusebene (z-Position);
Fig. 8f: eine Darstellung des Speichermenüs mit der Anzeige der gespeicherten Fokusebenen (z-Positionen);
Fig. 8g: eine Darstellung der Eingangsseite für das Speichern der Systemeinstellungen;
Fig. 8h: eine Darstellung des Speichermenüs für das Löschen und/oder Speichern von Systemeinstellungen;
Fig. 8i: eine Darstellung des Speichermenüs für das Speichern der aktuellen Einstellungen;
Fig. 8j: eine Darstellung des Speichermenüs für das Ablesen einer gespeicherten Systemeinstellung;
Fig. 8k: eine Darstellung des Speichermenüs für das Umbenennen der Tasten für gespeicherte Systemeinstellungen;
Fig. 9a: eine Darstellung des Konfigurationsmenüs, mit dem die grundlegenden Geräte- und Systemeinstellungen vorgenommen werden;
Fig. 9b: eine Darstellung des Konfigurationsmenüs für Menüeinstellungen;
Fig. 9c: eine Darstellung des Konfigurationsmenüs für Displayeinstellungen;
Fig. 9d: eine erste Darstellung des Konfigurationsmenüs für die erste Inbetriebnahme des Mikroskops;
Fig. 9e eine zweite Darstellung des Konfigurationsmenüs für die erste Inbetriebnahme des Mikroskops zum Montieren der Objektive;
Fig. 9f eine dritte Darstellung des Konfigurationsmenüs für die erste Inbetriebnahme des Mikroskops zum Montieren der Objektive
Fig. 9g eine vierte Darstellung des Konfigurationsmenüs für die erste Inbetriebnahme des Mikroskops zum Montieren der Objektive
Fig. 9h eine Darstellung des Konfigurationsmenüs für die erste Inbetriebnahme des Mikroskops zum Einsetzen von Abdeckungen
Fig. 9i eine Darstellung des Konfigurationsmenüs zum Abschluss der Objektivmontage;
Fig. 9j eine erste Darstellung des Konfigurationsmenüs zur Montage der Fluo-Filter;
Fig. 9k eine zweite Darstellung des Konfigurationsmenüs zur Montage der Fluo-Filter;
Fig. 9l eine dritte Darstellung des Konfigurationsmenüs zur Montage der Fluo-Filter;
Fig. 9m eine vierte Darstellung des Konfigurationsmenüs zur Montage der Fluo-Filter;
Fig. 9n eine Darstellung des Konfigurationsmenüs zum Abschluss der Montage der Fluo-Filter;
Fig. 10a eine Darstellung des Objektivmenüs für Trocken-Objektive bei nicht motorisiertem Objektivrevolver;
Fig. 10b eine Darstellung des Objektivmenüs für Immersions-Objektive bei nicht motorisiertem Objektivrevolver;
Fig. 11a eine erste Darstellung des Konfigurationsmenüs für die erste Inbetriebnahme des Mikroskops zum Montieren der Objektive am nicht motorisierten Objektivrevolver;
Fig. 11b eine zweite Darstellung des Konfigurationsmenüs für die erste Inbetriebnahme des Mikroskops zum Montieren der Objektive am nicht motorisierten Objektivrevolver;
Fig. 11c eine dritte Darstellung des Konfigurationsmenüs für die erste Inbetriebnahme des Mikroskops zum Montieren der Objektive am nicht motorisierten Objektivrevolver;
Fig. 11d eine vierte Darstellung des Konfigurationsmenüs für die erste Inbetriebnahme des Mikroskops zum Montieren der Objektive am nicht motorisierten Objektivrevolver;
Fig. 11e eine fünfte Darstellung des Konfigurationsmenüs für die erste Inbetriebnahme des Mikroskops zum Montieren der Objektive am nicht motorisierten Objektivrevolver
Fig. 11f eine sechste Darstellung des Konfigurationsmenüs für die erste Inbetriebnahme des Mikroskops zum Montieren der Objektive am nicht motorisierten Objektivrevolver
Fig. 11g eine siebte Darstellung des Konfigurationsmenüs zur Ausgabe einer Warnung, wenn das Objektiv nicht korrekt in den nicht motorisierten Objektivrevolver eingesetzt ist;
Fig. 11h eine Darstellung des Konfigurationsmenüs für die erste Inbetriebnahme des Mikroskops mit nicht motorisiertem Objektivrevolver zum Einsetzen von Abdeckungen; und
Fig. 11i eine Darstellung des Konfigurationsmenüs zum Abschluss der Objektivmontage am nicht motorisierten Objektivrevolver.

Fig. 1a zeigt ein Mikroskop 1 mit einem Stativbasisteil 3. Das Stativbasisteil 3 ist in drei Hauptabschnitte unterteilt, die sich aus einem Querhauptabschnitt 3a, einem Stativsäulenabschnitt 3b und einem Stativfußabschnitt 3c zusammensetzen. Am Stativsäulenabschnitt 3b ist ein Mikroskoptischhalteelement 4 befestigt, auf dem ein x/y-Tisch montiert ist. Gegenüber dem Mikroskoptischhalteelement 4 ist am Stativsäulenabschnitt 3b mindestens eine Lichtquelle 5 vorgesehen. In dem hier dargestellten Ausführungsbeispiel sind zwei Lichtquellen 5 vorgesehen. Dabei ist eine der Lichtquellen 5 für die Durchlichtbeleuchtung und die andere Lichtquelle 5 ist für die Auflichtbeleuchtung zuständig. Der Querhauptabschnitt 3a, der Stativfußabschnitt 3b und der Stativsäulenabschnitt 3c sind derart ausgestaltet, dass sie im wesentlichen die gleiche Breite besitzen. Am Stativ im Bereich des Stativsäulenabschnitt 3c ist jeweils beidseitig ein Stützelement 6 ausgebildet. Von besonderer Bedeutung ist, dass jedes der Stützelemente 6 im Bereich des Stativfußabschnitts 3c diesen in seiner Breite überragt.

Der Stativfußabschnitt 3c ist im Bereich gegenüber dem Stativsäulenabschnitt 3b konvex gekrümmt und besitzt im konvex gekrümmten Bereich 7 ein Display 8. Das Display 8 ist in der bevorzugten Ausführungsform als Touchscreen ausgebildet, der es dem Benutzer erlaubt, hierüber Parametereingaben zu machen bzw. bestimmte Messmethoden aufzurufen. Ist das Display 8 nicht als Touchscreen ausgestaltet, so werden über das Display 8 aktuelle Einstelldaten des Mikroskops 1 visuell dargestellt. Hinzu kommt, dass im Übergangsbereich zwischen dem Stativfußabschnitt 3c und dem Stützelement 6 zumindest auf einer Seite jeweils ein Triebknopf 9 vorgesehen ist, der z.B. die Mikroskoptischhalteelement 4 in seiner Höhe (z-Position, oder Fokuslage) verstellt. Der Triebknopf 9 besteht aus einem ersten und einem zweiten, koaxial angeordneten Drehelement 9a und 9b. Eines der Drehelemente ist für die Feinverstellung des x/y-Tisches bzw. des Mikroskoptischhalteelements 4 zuständig. Das andere Drehelement ist für die Grobverstellung zuständig. Es hat sich als besonders vorteilhaft erwiesen, dem ersten Drehelement 9a die Feinverstellung und dem zweiten Drehelement 9b die Grobverstellung zuzuweisen. Ebenso ist es denkbar, auf den Triebknopf 9 zusätzlich andere Funktionen zu legen. Im Bereich um den Triebknopf 9 sind mehrere Betätigungselemente 10 vorgesehen, über die ebenfalls Mikroskopfunktionen schaltbar sind. Die Betätigungselemente 10 sind als Druckknöpfe ausgebildet. Die Mikroskopfunktionen sind z.B. die Filterwechsel, Blendenwahl, Revolverbewegung usw. Am Stirnteil 11 des Querhauptabschnitts 3a ist ein Okularflansch 12 ausgebildet, der eine optische Verbindung mit einem Revolver 13 herstellt, an dem mindestens ein Objektiv (nicht dargestellt) angebracht werden kann. An einem Stützelement 6 ist ein Netzschalter 14 und ein Anschlusselement 15 vorgesehen. Über das Anschlusselement 15 kann das Mikroskop 1 mit mehreren externen Bedienelementen verbunden werden. Ebenso besteht am Anschlusselement 15 die Möglichkeit des Anschlusses von Datenleitungen (nicht dargestellt). Das Mikroskopsystem ist mit einem Rechner (nicht dargestellt) verbunden. Der Rechner kann im Stativbasisteil 3 integriert sein oder als extra Box mit dem Mikroskopsystem verbunden sein. Im Mikroskopsystems selbst sind eine Vielzahl von Motoren und mehrere Kodierungen oder Sensoren vorgesehen. Die Motoren dienen zur Verstellung von z.B. Fluo - Filterrad, Objektivrevolver, x / y Verstellung des Tisches, z-Verstellung des Tisches (Fokus) usw. Die Kodierungen und die Sensoren dienen dazu, dass das Mikroskopsystem erkennt, ob und welche Elemente dem Mikroskopsystem hinzugefügt worden sind. Elemente, die dem Mikroskopsystem hinzugefügt werden können, sind z.B. die verschiedensten Objektive (Trockenobjektive, Immersionsobjektive, Fluo-Filter, andere optische Filter usw. Bei der Erstinstallation (Konfiguration) lernt eine im Rechner implementierte Software die Ausstattung des Mikroskopsystems und kann während des Betriebs ständig auf diese Information zurück greifen. Über das Display (8) gibt die Software dem Benutzer Hinweise darüber, welche Konfiguration am besten für die gewünschte Untersuchung geeignet ist.

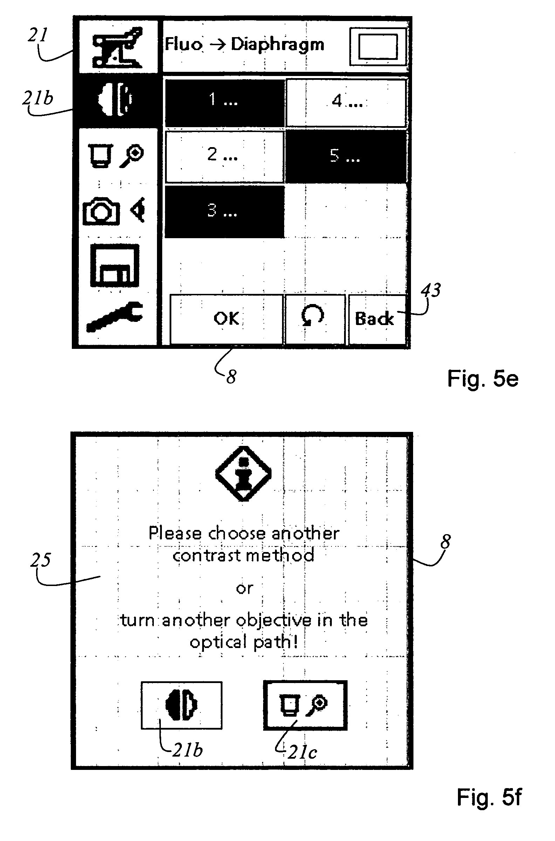

Fig. 1b zeigt eine Detailansicht des Displays 8, das im Stativ des Mikroskops vorgesehenen ist. Auf dem Display 8 ist schematisch ein Bendienmenü 20 dargestellt. Hinzu kommt, dass das Display 8 einen Informationsmodus 25 (siehe Fig. 5f) hinterlegt hat. Das Bedienmenü 20 besteht aus einem ersten Bereich 211, einem zweiten Bereich 221 und einem dritten Bereich 222. Im ersten Bereich 211 befindet sich ein Hauptmenü 21, im zweiten Bereich 221 ein Untermenü 22 und im dritten Bereich 222 sind Informations- und Aktionselemente darstellbar. Dabei ist der dritte Bereich 222 auf je einer Seite vom Hauptmenü 21 und dem Untermenü 22 eingegrenzt. Im Informationsmodus 25 wird das gesamte Display 8 zur Darstellung verwendet. Das Bedienmenü 20 ist in ein Hauptmenü 21 und mindestens ein Untermenü 22 gegliedert und weist eine klare Funktionstrennung und Funktionshierarchie auf. Im Hauptmenü 21 stehen mehrere Unterhauptmenüs 21a, 21 b, 21c zur Verfügung, die einzeln vom Benutzer ausgewählt werden können. Die Auswahl des Benutzers bedingt, dass ein dem jeweils ausgewählten Unterhauptmenü entsprechendes Untermenü 22 darstellbar ist. Die Unterhauptmenüs 21a, 21b, 21c, ... werden durch Ikons symbolisiert (siehe nachfolgende Figurenbeschreibung) und sind in jedem Betriebszustand präsent. Ausnahmen bilden, wie im Informationsmodus 25 hinterlegt, nur Systemmeldungen, die das ganze Display 8 belegen.

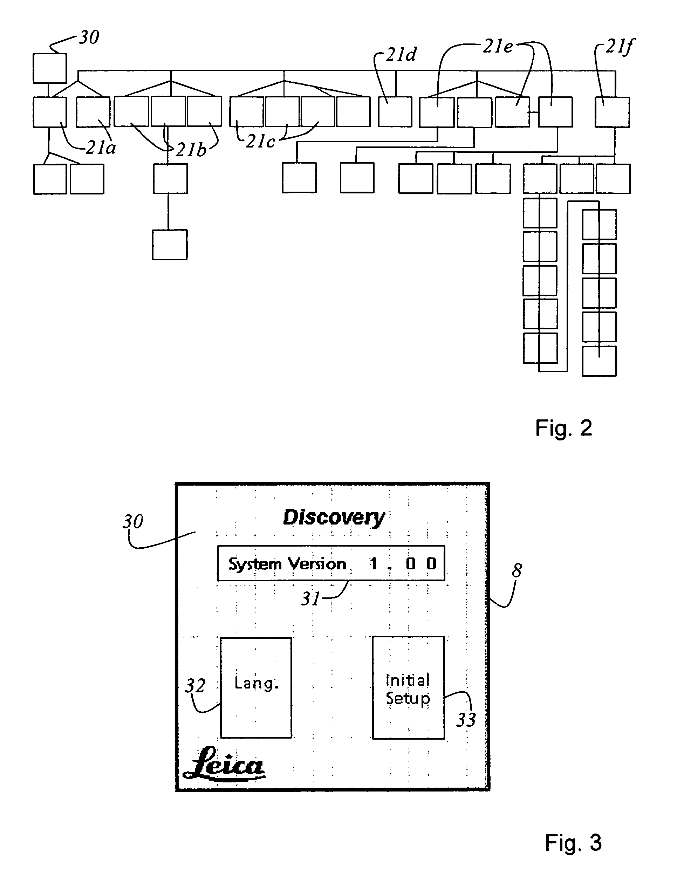

Fig. 2 zeigt eine der Steuerung des Mikroskopsystems zugrundeliegenden Struktur des Hauptmenüs. In einem bevorzugten Ausführungsbeispiel besteht das Hauptmenü 21 aus sechs verschiedenen Unterhauptmenüs. Ein erstes Unterhauptmenü 21a ist eine Setupanzeige. Dem erstem Unterhauptmenü 21a ist eine Eingansseite 30 (siehe Fig. 3) vorgeschaltet. Ein zweites Unterhauptmenü 21b ist ein Kontrastmenü. Ein drittes Unterhauptmenü 21c ist ein Objektivmenü. Ein viertes Unterhauptmenü 21d ist ein Portmenü. Ein fünftes Unterhauptmenü 21e ist ein Speichermenü. Ein sechstes Unterhauptmenü 21f ist ein Konfigurationsmenü.

Fig. 3 ist eine Darstellung der Eingansseite 30, die auf dem Display 8 des Mikroskops dargestellt ist. Die Eingangsseite 30 belegt das ganze Display 8. Die Eingangsseite 30 erscheint einmalig bei jedem Einschalten des Mikroskopsystems und zeigt in einem ersten Bereich 31 die Firmware Version an und ermöglicht durch einen ersten Auswahlbutton 32 die Sprachauswahl (*"Lang*.*"*, Länderanpassung; evtl. auch Zielgruppenanpassung - z. B. Anzeige von Abkürzungen oder voll ausgeschriebenen Worten und Wortteilen) und einen Auswahlbutton 33, mit dem die Erstkonfiguration des Mikroskopsystems erfolgt. Wird vom Benutzer keine Auswahl vorgenommen, wird die zuletzt eingestellte bzw. voreingestellte Sprache verwendet. Nach einer gewissen Zeitdauer ohne Eingabe durch den Benutzer (Time-out) wird automatisch die voreingestellte Sprache verwendet.

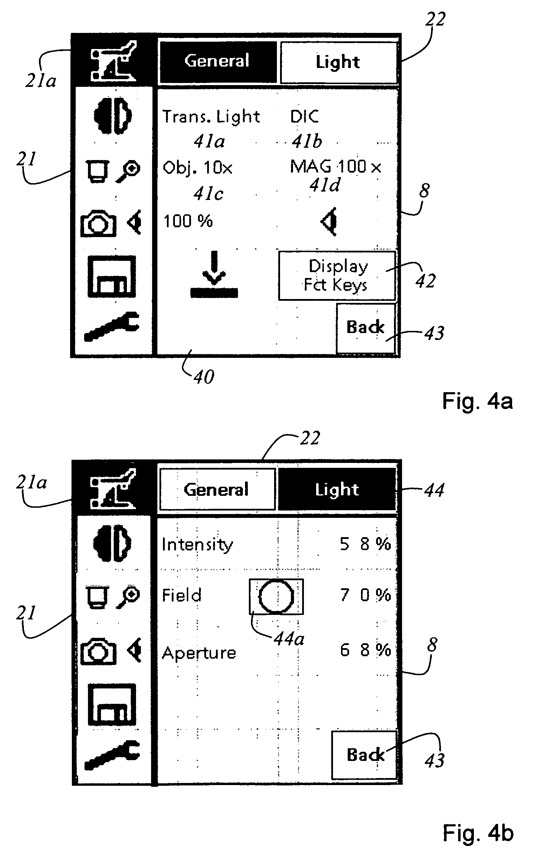

In den Fign. 4a bis 4d sind Setupanzeigen zur der generellen Einstellungen des Mikroskopsystems dargestellt. Hier kann der gesamte Betriebszustand des Mikroskopsystems rasch abgelesen werden. Dabei ist in jeder der dargestellten Fign. 4a bis 4d das momentan aktive Untermenü 22 oder die momentan aktive Funktion dunkel hinterlegt. Ebenso ist das momentan aktive erste Unterhauptmenü 21 a im Hauptmenü 21 an der linken Seite des Displays 8 dunkel hinterlegt. Das erste Unterhauptmenü 21a, die Setupanzeige zu den generellen Einstellungen, ist als stilisiertes Mikroskop dargestellt. In Fig. 4a ist ein Setupmenü 40 für die generellen Systemeinstellungen gezeigt. Der mit *"General"* bezeichnete Button ist aktiviert, so dass die allgemeinen Systemeinstellungen angezeigt werden. In dem nicht von Hauptmenü 21 und Untermenü 22 belegten Bereich des Displays 8 werden der aktuelle Lichtpfad 41 a und das momentan eingestellte Kontrastverfahren 41b angezeigt. Als Lichtpfad 41a erscheint auf dem Display 8 *"Trans. Light"* angezeigt, was auf eine Durchlichtbeleuchtung hindeutet. Als Kontrastverfahren 41b erscheint auf dem Display *"DIC"* was differenzieren Interferenzkontrast bedeutet. Eine weitere Anzeige ist das momentan im Strahlengang angeordnete Objektiv 41c und die eingestellte Nachvergrößerung 41d, die mit *"MAG"* bezeichnet ist. Der gewählte Port 41e wird angezeigt. Dabei zeigt ein stilisiertes Auge an, das momentan der Okularport Verwendung findet. Die Prozentangabe ist ein Hinweis, dass 100% des vom Objekt kommenden Lichts auf das Okular gelenkt werden. Neben einem Button 42 mit der Bezeichnung *"Display Fct. Keys"* zur Anzeige der mit den Funktionsknöpfen aktivierbaren Funktionen, ist der Beleuchtungsmodus stilisiert als Piktogramm wiedergegeben. Im vorliegenden Fall ist die Auflichtbeleuchtung dargestellt. Mit einem Button 43, der mit "*Back*" bezeichnet ist, kann immer zu der vorhergehenden Darstellung auf dem Display 8 zurückgesprungen werden. Es ist zu bemerken, dass in der Darstellung der unterschiedlichen Displays Elemente mit gleichen Funktionen bzw. gleichen Bedeutungen mit dem gleichen Bezugszeichen dargestellt sind.

In Fig. 4b sind die aktuellen Lichteinstellungen wiedergegeben. In dieser Darstellung ist der mit *"Light"* bezeichnete Betätigungsknopf 44 aktiviert. Die Bezeichnung *"Intensity"* steht für die Intensität, wobei diese wiederum in Prozent angegeben wird. Im vorliegenden Fall werden 58% der Lichtintensität verwendet. Die Bezeichnung *"Field"* steht für die Feldblende. Neben der Bezeichnung *"Field"* wird der Typ der Feldblende angezeigt und der Prozentsatz von 70% bedeutet, dass die Blende zu 70% offen ist. Im vorliegenden Fall ist die im Strahlengang befindliche Feldblende 44a rund ausgestaltet. Die Aperturblende ist mit *"Aperture"* bezeichnet und der Aperturblende ist ebenfalls eine Prozentangabe zugeordnet. Die Aperturblende ist zu 68% offen.

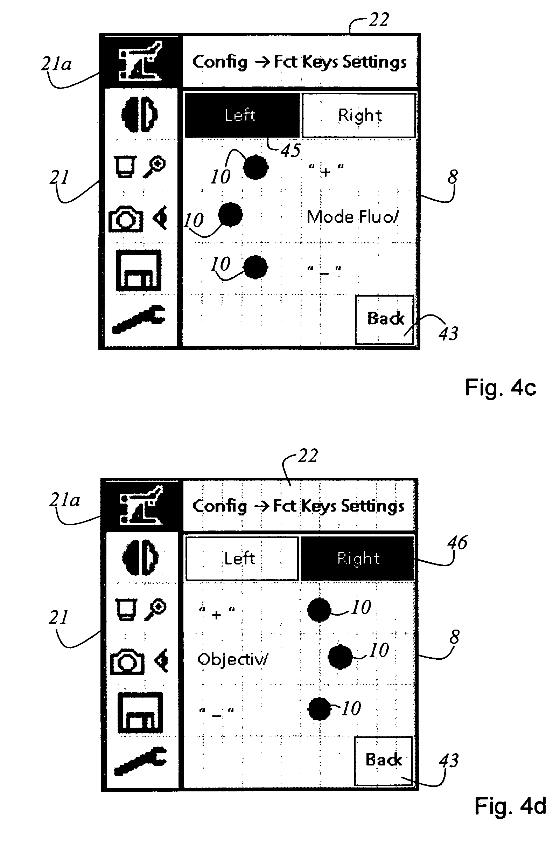

Beim Drücken des in Fig. 4a dargestellten Buttons 42 mit der Bezeichnung *"Display Fct. Keys",* erscheint die in Fig. 4c dargestellte Setupanzeige zur Anzeige der Belegung der Funktionsknöpfe 10 auf der linken Seite des Stativs des Mikroskopsystems. Dass die Funktionsknöpfe 10 auf der linken Seite des Stativs auf dem Display 8 dargestellt werden, kann der Benutzer aus dem mit "*Left*" bezeichneten und dunkel hinterlegten Betätigungsknopf 45 entnehmen. In vorlegenden Fall ist die Belegung für dem mittleren Funktionsknopf mit *"Mode Fluo"* bezeichnet. Dem oberen Funktionsknopf ist z.B. ein "+" zugeordnet, was auf eine Drehung des Filterrades in Uhrzeigersinn hindeutet. Dem unteren Funktionsknopf ist z.B. ein "-" zugeordnet, was auf eine Drehung des Filterrades in Gegenuhrzeigersinn hindeutet.

In Fig. 4d ist die Setupanzeige zur Anzeige der Belegung der Funktionsknöpfe 10 auf der linken Seite des Stativs des Mikroskopsystems dargestellt. Dass die Funktionsknöpfe 10 auf der linken Seite des Stativs auf dem Display 8 dargestellt werden, kann der Benutzer aus dem mit *"Right"* bezeichneten und dunkel hinterlegten Betätigungsknopf 46 entnehmen. In vorliegenden Fall ist die Belegung für dem mittleren Funktionsknopf mit *"Objectiv"* bezeichnet, was auf die im Revolver vorgesehenen und angeordneten Objektive hindeutet. Dem oberen Funktionsknopf ist z.B. ein "+" zugeordnet, was auf eine Drehung des Objektivrevolvers in Uhrzeigersinn hindeutet. Dem unteren Funktionsknopf ist z.B. ein "-" zugeordnet, was auf eine Drehung des Objektivrevolvers in Gegenuhrzeigersinn hindeutet.

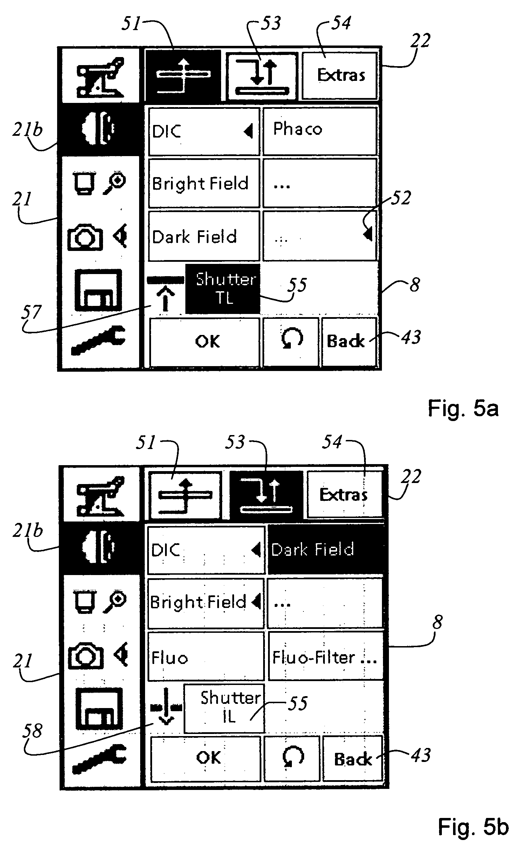

In den Fign. 5a bis 5g sind die Kontrastmenüs mit den zugehörigen Untermenus dargestellt. Im Kontrastmenü 21b können in Untermenüs 22 die vorhandenen Kontrastverfahren für Auflicht und Durchlicht 51 (siehe Fig. 5a) ausgewählt werden. Dreiecke 52 im Display 8, die den verschiedenen Anzeigen zugeordnet sind, dienen hierbei als Empfehlung für mit bisherigen Einstellungen (z.B. verwendete Objektive) kompatiblen Kontrastverfahren. Im entsprechenden Untermenü für Auflicht 53 gelangt man bei den Bio-Stativen in den Einstellbereich des Fluoreszenzverfahrens. Dort erfolgt für die Bio-Stative die Auswahl der Filterblöcke, für die Industrie-Stative die Auswahl der Reflektorblöcke, außerdem das Öffnen und Schließen des Shutters sowie das Deaktivieren des Displays. Diese Funktionsgruppen folgen den häufigsten Bedienmustern und vermeiden die Notwendigkeit zu häufigem Wechseln im Menü. Der *"EXTRA"*-Button 54 im Untermenü 22 ermöglicht die Implementierung spezieller Kontrastierverfahren, z.B. die simultane Durchführung verschiedener Auf- und Durchlichtverfahren.

In Fig. 5a ist eine Darstellung des Kontrastmenüs 21 b für Durchlicht gezeigt, wobei die Anzeige für Durchlicht 51 ebenfalls dunkel hinterlegt ist. Die Anzeige für Durchlicht 51 ist durch ein Piktogramm symbolisiert, das einen durch einer Probe hindurchtretenden Lichtstrahl darstellt. Die Auswahl der vorhandenen Kontrastverfahren ist auf dem Display 8 in einzelnen Feldern dargestellt. Das Feld mit der Bezeichnung *"DIC"* steht für Differential Interferenzkontrast. Das Feld mit der Bezeichnung "*Phaco*" steht für Phasenkontrast. Das Feld mit der Bezeichnung *"Bright Flield"* steht für Hellfeld. Das Feld mit der Bezeichnung *"Dark Flield"* steht für Dunkelfeld. Die Felder sind alle über das als Touchscreen ausgebildete Display 8 aktivierbar. Dreiecke 52 in den Feldern stellen eine Empfehlung dar und kennzeichnen die Kontrastverfahren, die mit den bisherigen Systemeinstellungen, insbesondere mit dem aktiven Objektiv (im Strahlengang des Mikroskops vorgesehenen Objektiv) kompatibel sind. Das Öffnen und Schließen des Shutters kann durch einem mit *"Shutter TL"* bezeichneten Button 55 aktiviert werden. Die Anzeige des aktuellen Shutter-Zustands (auf/zu) erfolgt mit Piktogramm 57, das einen blockierten Pfeil zeigt.

In Fig. 5b ist eine Darstellung des Kontrastmenüs 21 b für Auflicht gezeigt, wobei die Anzeige für Auflicht 53 dunkel hinterlegt ist. Anzeige des aktuell eingestellten Kontrastverfahrens wird durch ein dunkel hinterlegtes Feld gekennzeichnet. Im vorliegenden Fall ist das *"Dark Field",* das für Dunkelfeld steht eingestellt. Die Dreiecke 52 stellen, wie bereits in Fig. 5a beschieben, eine Empfehlung zur Konfiguration dar. Für die Auswahl der Filtereinstellungen beim Fluoreszenz-Verfahren wird im Kontrastmenü 21 b zusammen mit dem Button 50a mit der Bezeichnung *"Fluo"* ein separater Button 50b mit der Bezeichnung *"Fluo-Filter"* angeboten. Das Öffnen und Schließen des Shutters erfolgt durch einen mit *"Shutter IL"* bezeichneten Button 55. Die Anzeige des aktuellen Shutter-Zustands (hier: auf) erfolgt mit Piktogramm 58, das einen nicht blockierten Pfeil zeigt.

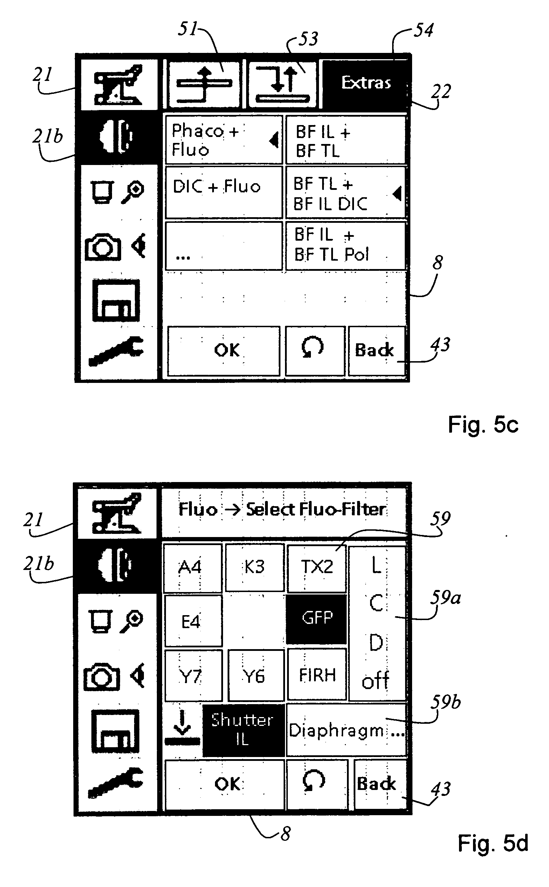

In Fig. 5c ist eine Darstellung des Kontrastmenüs für spezielle Kontrastverfahren gezeigt, wobei der "*EXTRA*"-Button 54 nun dunkel hinterlegt und somit aktiviert ist. Eine Zusammenschaltung von Auf- und Durchlicht mit Kontrastverfahren erfolgt mit voreingestellten Parametern. Ebenfalls markieren Dreiecke 52 die Empfehlung von Kombinationen, die bei den derzeitigen Einstellungen kombiniert werden können. Das Kontrastmenü ist durch einen hellen und dunklen Kreisabschnitt auf dem Funktionsschalter gekennzeichnet.

In Fig. 5d ist eine Auswahl des Fluoreszenzmenüs als des Kontrastmenü dargestellt. Die Auswahl der Fluoreszenz-Filterblöcke 59, acht Stück, sind in zirkularer Anordnung auf dem Display 8, entsprechend der Einbaulage im Filterrad gezeigt. Ein "*LCD off*" Button 59a ist vorgesehen, damit das Display 8 deaktiviert werden kann und somit Streulicht vermieden wird. Dies ist insbesondere bei der Betrachtung in abgedunkelter Umgebung von enormer Bedeutung. Neben dem mit *"Shutter IL"* bezeichneten Button 55 ist ein *"Diaphram"* Button 59b vorgesehen, womit die Blende verändert werden kann.

In Fig. 5e ist eine Auswahl der Blenden im Fluoreszenzmenü gezeigt. Auf dem Display 8 werden die zur Auswahl stehenden Eckblenden in Form von Buttons angezeigt. Die aktuell ausgewählten Eckblenden erkennt man daran, dass sie dunkel hinterlegt sind.

Ein Kompatibilitätshinweis im Kontrastmenü ist in Fig. 5f dargestellt. Beim Aufruf einer inkompatiblen Kombination von Objektiv und Kontrastverfahren gibt das System einen Hinweis mit der Aufforderung, eine der beiden Komponenten abzuändern. Die Meldung auf dem Display 8 lautet: *"Bitte wählen Sie ein anderes Kontrastverfahren ODER schwenken Sie ein anderes Objektiv in den Strahlengang".* Sowohl in das Kontrastmenü 21b als auch in das Objektivmenü 21c kann durch Drücken des jeweiligen Buttons direkt gewechselt werden. Das System behält so lange die alte Konfiguration bei, bis eine neue kompatible Kombination ausgewählt wurde. Das Menü, in dem noch eine weitere passende Komponente ausgewählt werden muss, um die gewünschte Funktion zu aktivieren, wird mit einem blinkenden Rahmen als Auswahlempfehlung auf dem Display 8 angezeigt. Im vorliegenden Fall ist das Objektivmenü 21c mit dem blinkenden Rahmen versehen. Der Wechsel in ein anderes Menü ist nicht möglich.

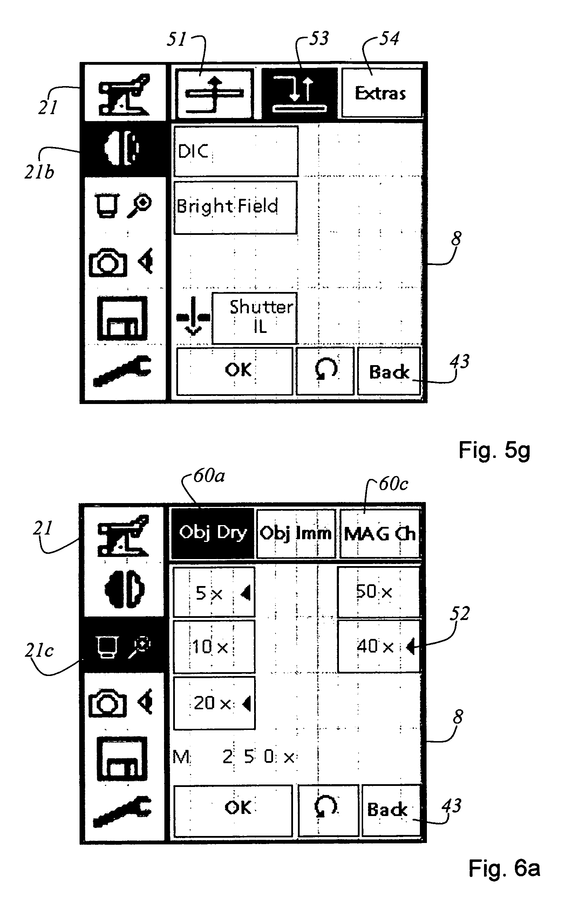

In Fig. 5g ist eine Darstellung einer kompatiblen Auswahl im Kontrastmenü gezeigt. Hier ist beispielhaft das Kontrastmenü 21b für Auflicht bestimmt worden. Auf dem Display 8 werden - abweichend von Darstellung 5b - ausschließlich kompatible Kontrastverfahren zur Auswahl angezeigt, weil diese Auswahl in 5f durch Drücken von Objektivmenü 21c ausgelöst wurde. Bei dieser Auswahl kann nur zwischen dem Objektivmenü 21c-, dem Kontrastmenü 21b-, dem Hauptmenü 21 und den jeweiligen Untermenüs 51, 53 und 54 gewechselt werden. Bei Aufruf eines anderen Menüs wird wieder der Kompatibilitätshinweis eingeblendet. Die Shutterbetätigung ist möglich, tritt aber erst nach Auswahl kompatibler Elemente in Kraft. Nach Auswahl einer kompatiblen Komponente und der Bestätigung mit dem "OK" Button wechselt das System wieder in den normalen Auswahlmodus.

Die Fign. 6a bis 6f zeigen separate Untermenüs für Trockenobjektive, Immersionsobjektive und für den Mag Changer an. Sind auch Kombi-Objektive im System enthalten, so werden diese in beiden Objektiv-Menüs aufgeführt. Angezeigt wird das im Lichtpfad bzw. in der Arbeitsposition befindliche Objektiv, eine Auswahl der vorhandenen Objektive, sowie die aktuelle Gesamtvergrößerung. Für die Auswahl der Nachvergrößerungen steht der Button 60c, der mit "*MAG*-*Ch*" bezeichnet ist, zur Verfügung.

In Fig. 6a ist eine Darstellung des Objektivmenüs 21c für Trocken-Objektive gezeigt. Der Button 60a hierfür ist mit *"Obj Dry"* bezeichnet. Die Anzeige des im Lichtpfad befindlichen Objektivs wird durch Invertierung des Buttons angezeigt. Die Buttons sind mit der Vergrößerung beschriftet, die mit dem jeweiligen Objektiv erreicht werden kann. Die Auswahl der vorhandenen Objektive erfolgt durch Betätigung des jeweiligen Buttons. Ebenfalls zeigen Dreiecke 52 diejenigen Objektive an, die mit den bisherigen Systemeinstellungen (z.B. Kontrastverfahren) kompatibel sind. Unterhalb der Auflistung der vorhandenen Objektive ist eine Anzeige der aktuellen Gesamtvergrößerung vorgesehen. Im vorlegenden Fall ist die Gesamtvergrößerung 250-fach und ist mit "*M 250 x*" bezeichnet. Das Objektivmenü ist durch ein stilisiertes Objektiv und eine stilisierte Lupe auf dem Funktionsschalter gekennzeichnet.

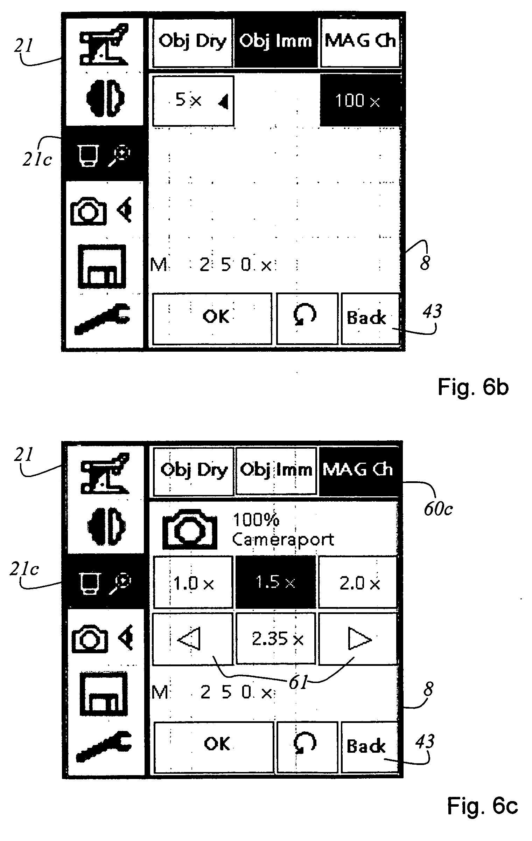

Fig. 6b ist eine Darstellung des Objektivmenüs für die Auswahl von Immersions-Objektiven. Dabei werden Kombi-Objektive, wie z.B. hier das Objektiv mit 5-facher Vergrößerung, sowohl im Objektivmenü 21c für Trocken- als auch im Menü für Immersions-Objektive angezeigt.

In Fig. 6c ist eine Darstellung des Objektivmenüs 21c für die Nachvergrößerung bezüglich des Kameraports gezeigt. Dabei ist der Button 60c, der mit *"MAG-Ch"* bezeichnet ist, dunkel hinterlegt. Die Anzeige der aktuell eingestellten Nachvergrößerung, wie z.B. hier 1,5 -fach, ist dunkel hinterlegt und es ist eine Auswahl der vorhandenen drei fixen Nachvergrößerungen möglich. Daneben ist eine Verstellung über einen Vario-Zoom möglich und die Ansteuerung des Vario-Zooms erfolgt über Pfeiltasten 61. Das Inkrement für die Verstellung des Vario-Zooms wird dynamisch angepasst. Bei einer Einzelbetätigung einer Pfeiltaste 61 ist z.B. das Inkrement 0,05 und bei einer Dauerbetätigung einer Pfeiltaste 61 ist das Inkrement 0,1. Die Einstellung der Nachvergrößerung für den Kameraport kann der Benutzer durch das auf dem Display 8 dargestellten Piktogramm einer Kamera entnehmen.

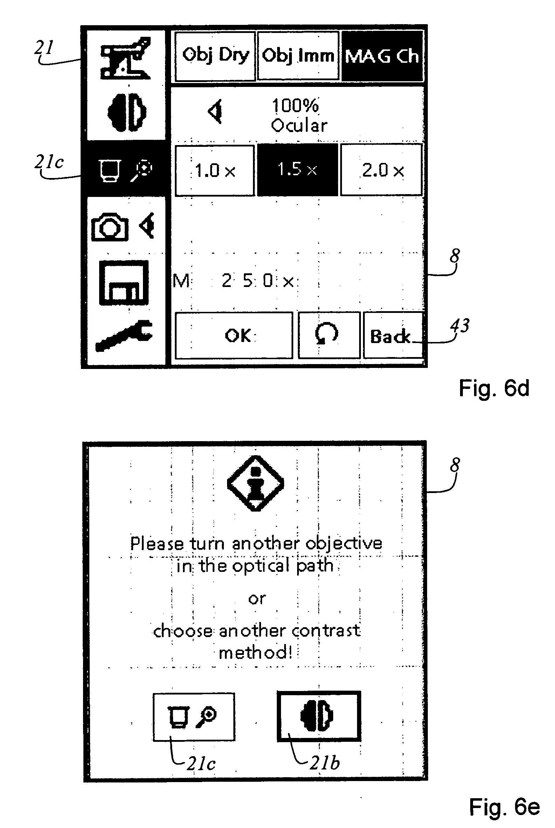

Fig. 6d ist eine Darstellung des Objektivmenüs für die Nachvergrößerung bezüglich des Okularports. Auf dem Display 8 erfolgt die Anzeige der aktuell eingestellten Nachvergrößerung. Der Benutzer hat die Auswahl von drei der vorhandenen fixen Nachvergrößerungen und es ist die Anzeige der aktuellen Gesamtvergrößerung vorgesehen (siehe auch Fig. 6c). Die Einstellung der Nachvergrößerung für den Okularport kann der Benutzer durch das auf dem Display 8 dargestellten Piktogramm eines Auges entnehmen.

Fig. 6e ist eine Darstellung eines Kompatibilitätshinweises im Objektivmenü. Beim Aufruf einer inkompatiblen Kombination von Objektiv und Kontrastverfahren gibt das System einen Hinweis mit der Aufforderung, eine der beiden Komponenten abzuändern. Die Aufforderung lautet: *"Bitte schwenken Sie ein anderes Objektiv in den Strahlengang ODER wählen Sie ein anderes Kontrastverfahren".* Sowohl in das Kontrastmenü 21b als auch in das Objektivmenü 21c kann durch Drücken des jeweiligen Buttons direkt gewechselt werden. Das System behält so lange die alte Konfiguration bei, bis eine neue, kompatible Kombination ausgewählt wurde. Das Menü, in dem noch eine weitere passende Komponente ausgewählt werden muss, um die gewünschte Funktion zu aktivieren, wird mit einem blinkenden Rahmen als Auswahlempfehlung angezeigt. Im vorlegenden Fall ist dies für das Kontrastmenü 21b der Fall. Der Wechsel in ein anderes Menü ist nicht möglich.

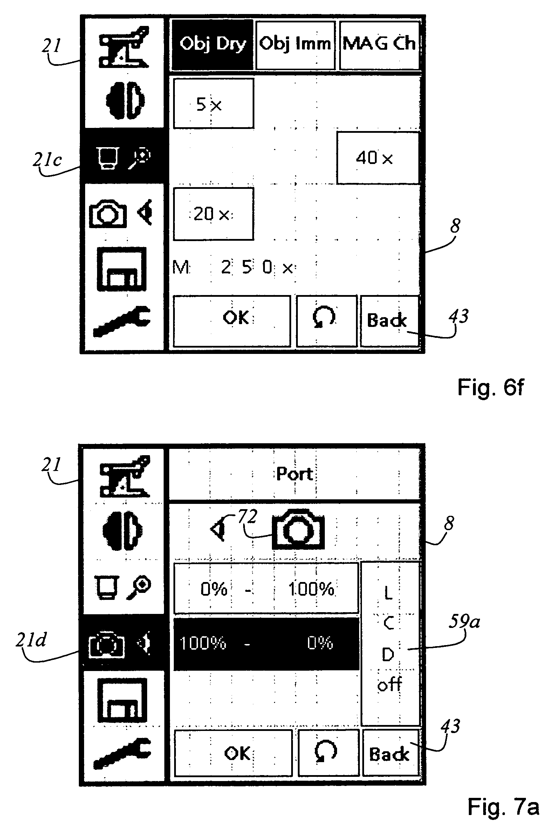

In Fig. 6f wird dem Benutzer - abweichend von 6a - eine Darstellung einer kompatiblen Auswahl im Objektivmenü 21c gezeigt, weil diese Auswahl in 6e durch Drücken des Objektivmenüs 21c ausgelöst wurde. Im vorliegenden Fall ist es eine Auswahl der kompatiblen Objektive die Trockenobjektive. Es werden ausschließlich kompatible Objektive zur Auswahl angezeigt (hier Objektive mit 5-facher, 20-facher, 40-facher Vergrößerung). In diesem Modus kann nur zwischen dem Objektivmenü 21c, dem Kontrastmenü 21c, dem Hauptmenü 21a und den jeweiligen Untermenüs gewechselt werden. Bei Aufruf eines anderen Menüs wird wieder der Kompatibilitätshinweis (siehe Fig. 6e) eingeblendet. Nach Auswahl einer kompatiblen Komponente und der Bestätigung mit "OK"-Buttons, wechselt das System wieder in den normalen Auswahlmodus.

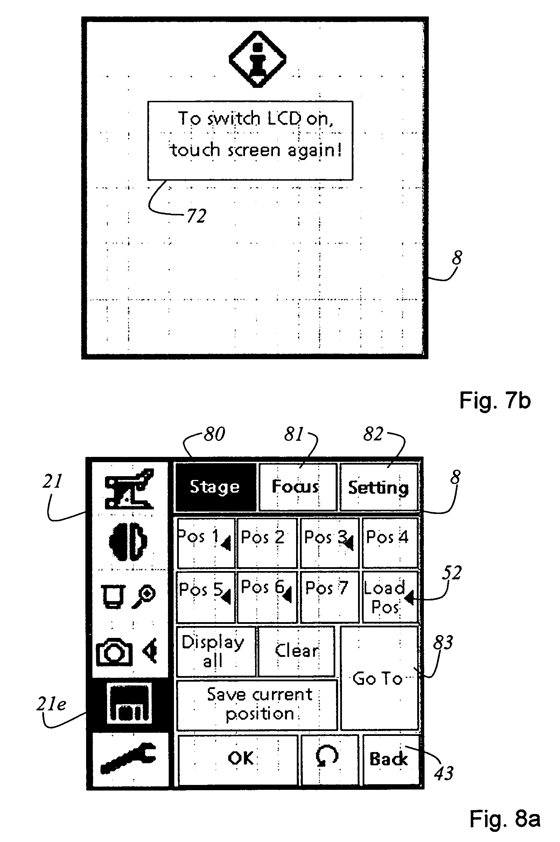

Fig. 7a ist eine Darstellung eines Portmenüs 21d mit der Anzeige des aktuell eingestellten Betrachtungsausganges. Das Portmenü 21 d zeigt den aktuell eingestellten Betrachtungsausgang an und ermöglicht eine Auswahl der vorhandenen Ausgänge. Zur Vermeidung von Streulicht bei Fotoaufnahmen ist eine Deaktivierung des Displays über einen *"LCD off*" Button 59a möglich. Zur Auswahl der vorhandenen Betrachtungsausgänge sind diese durch Piktogramme 72 dargestellt. Ein stilisiertes Auge steht für die Beobachtung bzw. den Port über das Okular. Das Piktogramm der stilisierten Kamera steht für den Kameraport. Das Deaktivieren des Displays 8, zur Vermeidung von Streulicht, insbesondere bei der Betrachtung in abgedunkelter Umgebung und bei der Anfertigung von Fotos, erfolgt bei gedrücktem *"LCD OFF"* Button 59a. Die in Fig. 7b dargestellte Systemmeldung erfolgt für die Reaktivierung des Displays 8. Eine Meldung 73 bleibt nur drei Sekunden sichtbar, bevor das Display 8 abgeschaltet wird. Die Meldung 73 lautet: *"Um das LCD - Display einzuschalten berühren Sie den Touchscreen".* Die Reaktivierung erfolgt durch erneutes Drücken auf das Display 8 bzw. dem Touch-Screen.

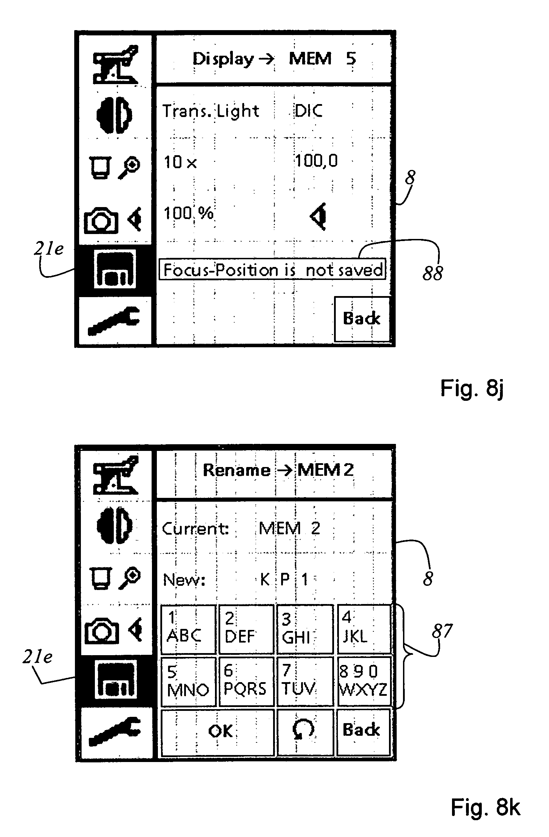

Ein weiteres Menü im Hauptmenü 21 ist das Speichermenü 21e (siehe z.B. Fig. 8a) Das Speichermenü 21e erlaubt eine Vielzahl neuartiger Speicherfunktionen. Es zeigt in drei Untermenüs, einem für die aktuell gespeicherte Tischpositionen 80 (x-/y-Achse, mit *"Stage"* bezeichnet), einem für die Fokusebene 81 (z-Achse, mit *"Focus"* bezeichnet). "Stage" und "Focus" ermöglichen das Einstellen, Löschen und Speichern von bis zu acht Positionen bzw. sechs Fokusebenen. Ein letztes Menü ist mit dem *"Setting"* Button 82 bezeichnet und ermöglicht es, bis zu sechs komplette Betriebszustände zu speichern, wobei wahlweise auch die zugehörige Fokusposition mit abgespeichert werden kann. Damit ist ein rascher Wechsel zwischen häufig verwendeten Zuständen möglich. Das Speichermenü ist durch eine stilisierte Diskette auf dem Funktionsschalter gekennzeichnet.

In Fig. 8a ist eine Darstellung des Speichermenüs 21e für die verschiedenen Tischpositionen 80 (x-/y-Achse). Zur Kennzeichnung der Aktivität ist der *"Sta*ge" Button 80 dunkel hinterlegt. Der Ablauf für das Einstellen einer gespeicherten Tischposition (x-/y-Position) lässt sich wie folgt beschreiben. Zuerst gilt es einen der mit "*Pos 1"* bis "*Pos 7*" bzw. *"Load Position"* bezeichneten Buttons zu wählen. Mit der Betätigung eines "*Go To*" Button, wird die entsprechende Tischposition (x-/y-Position) durch das Drücken des "OK" Buttons (Normal Mode) angefahren. Der Ablauf für das Speichern der aktuellen Tischposition (x-/y-Position) erfolgt zuerst durch das Wählen der mit "*Pos 1*" bis "*Pos 7*" bzw. *"Load Position"* bezeichneten Button. Die Speicherung wird durch Drücken des "*Save current position"* Button ermöglicht und die Speicherung wird durch das Betätigen des "OK" Buttons bestätigt. Ein Dreieck 52 erscheint auf dem Button der Speicherposition und blinkt zunächst 3 Sekunden, um den Speichervorgang zu visualisieren und um auf die Bedeutung des Dreiecks - Position belegt - hinzuweisen. Ebenso ist eine Löschung von gespeicherten Tischpositionen (x/y Position) möglich. Für das Löschen einer gespeicherten Tischposition (x-/y-Position) ist zunächst durch den "*Pos 1*" bis *Pos 7*" bzw. die *"Load Position"* die zu löschende Tischposition zu wählen. Die Betätigung des "*Clear*" Buttons ermöglicht das Löschen, was durch Drücken des "OK" Buttons bestätigt wird. Belegte und abrufbare Speicherplätze werden mit einem Dreieck gekennzeichnet. Die Anzeige aller gespeicherten Tischpositionen erfolgt mit dem *"Display all"* Button.

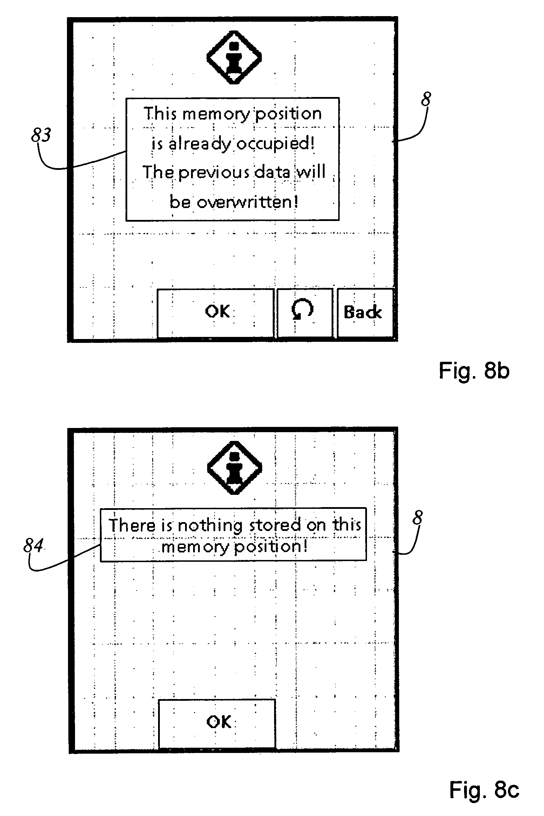

Fig. 8b zeigt eine Darstellung einer Sicherheitsabfrage 83, die belegte Speicherplätze vor Überschreiben schützt. Belegte Speicherplätze sind vor Überschreiben durch die Sicherheitsabfrage 83 auf einer eigenen Darstellung auf dem Display 8 geschützt. Vor dem Überschreiben einer Speicherposition wird die Sicherheitsabfrage 83 eingeblendet, die den Benutzer vor die Wahl stellt, ob die Position wirklich überschrieben werden soll, oder ob er den Vorgang abbrechen möchte. Die Sicherheitsabfrage 83 lautet: *"Diese Speicherposition ist bereits belegt. Die alten Daten werden überschrieben".*

Fig. 8c ist eine Darstellung einer Sicherheitsabfrage 84, die dem Benutzer freie Speicherplätze anzeigt. Beim Aufruf einer leeren Speicherposition gibt der Dialog einen Hinweis aus, der dem Benutzer anzeigt, dass die Speicherposition nicht belegt ist. Nach dem Drücken des "OK" Buttos gelangt man wieder zurück in das vorige Speichermenü. Die Sicherheitsabfrage 84 lautet: *"Es ist nichts auf dieser Speicherposition gespeichert ".*

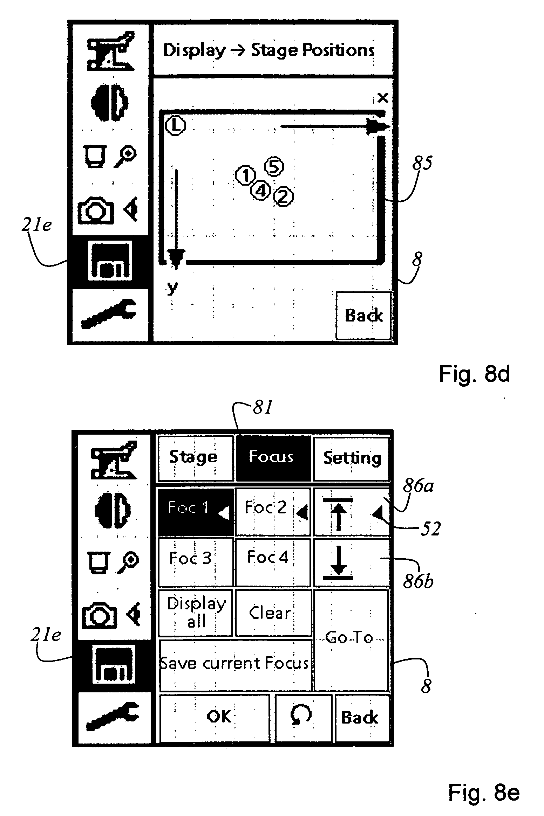

Fig. 8d ist eine Darstellung des Speichermenüs mit der Anzeige der gespeicherten x/y Positionen des Tisches. Eine mit *"Display* → *Stage Positions"* bezeichnete Anzeige aller gespeicherten Tischpositionen erfolgt zur groben Orientierung auf dem Display 8 in einem Koordinatensystem oder auf einem stilisiertem Tisch 85. Dicht zusammen liegende Speicherpositionen werden nicht maßstabsgetreu dargestellt.

Fig. 8e ist eine Darstellung des Speichermenüs 21 e zum Speichern einer Fokusebene 81 (z-Position). Der Ablauf für das Abrufen einer gespeicherten Fokusebene (z-Position) kann mit dem zum Abrufen einer gespeicherten Tischposition verglichen werden. Dennoch soll der Vollständigkeit halber hierauf näher eingegangen werden. Zunächst kann man über die mit "*Foc 1"* bis *"Foc 4"* bzw. mit "Obere - Ebene" 86a und "Untere-Ebene" 86b die gewünschte Position wählen. Mit dem Drücken des "*Go To*" Buttons und mit der Betätigung des "OK" Buttons wird die Auswahl bestätigt. Das Speichern der aktuellen Fokusebene 81 (z-Position) erfordert zunächst, dass man über die mit *"Foc 1*" bis *"Foc 4*" bzw. mit "Obere - Ebene" 86a und "Untere-Ebene" 86b bezeichneten Buttons die gewünschte Position zum Speichern wählt. Das Betätigen des "*Save current Focus"* Buttons und das anschließende Drücken des "OK" Buttons führt zur Speicherung. Das Dreieck 52 erscheint und blinkt 3 Sekunden, um den Speichervorgang zu visualisieren und um auf die Bedeutung des Dreiecks - Position belegt - hinzuweisen. Der Ablauf für das Löschen einer gespeicherten Fokusebene erfolgt zunächst über das Auswählen der mit *"Foc 1*" bis *"Foc 4*" bzw. "Obere- Ebene" und "Untere-Ebene" bezeichneten Buttons, was auf die zu löschende Position hindeutet. Die Betätigung des "*Clear*" Buttons ermöglicht das Löschen, was durch Drücken des "OK" Buttons bestätigt wird. Belegte und abrufbare Speicherplätze werden mit einem Dreieck gekennzeichnet. Die Anzeige aller gespeicherten Tischpositionen erfolgt mit dem *"Display all"* Button. Entsprechend der in Fig. 8b und Fig. 8c erfolgen auch bei den Speichen bzw. Löschen der Tischpositionen Warnungen für den Benutzer.

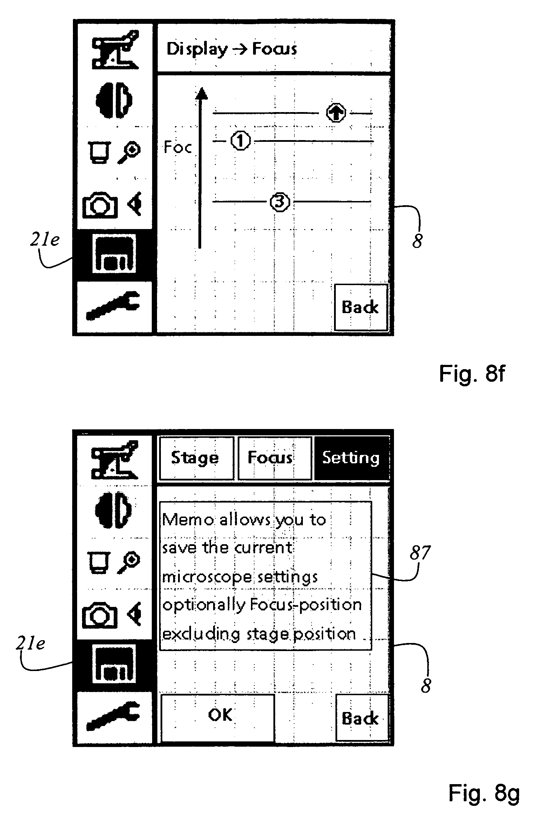

Fig. 8f ist eine Darstellung des Speichermenüs mit der Anzeige der gespeicherten Fokusebenen (z-Positionen). Auf dem Display 8 erfolgt eine vereinfachte Anzeige aller gespeicherten Fokusebenen (z-Position) in einem Koordinatensystem zur groben Orientierung. Die z-Achse des Koordinatensystems ist auf dem Display 8 durch "*Foc*" gekennzeichnet.

Fig. 8g zeigt eine Darstellung der Eingangsseite für das Speichern der Systemeinstellungen. Es ist eine Informationsseite 87 zur Funktion "Memo". Diese Seite wird auf dem Display 8 nur im ,Normal Mode' angezeigt und erscheint nach jedem Systemstart nur zwei Mal. Die Information für den Benutzer lautet: "*Memo ermöglicht* es *Ihnen die gegenwärtigen Mikroskopeinstellungen zu speichern und optional die Fokus Position, wobei die Tischposition ausgeschlossen ist".*

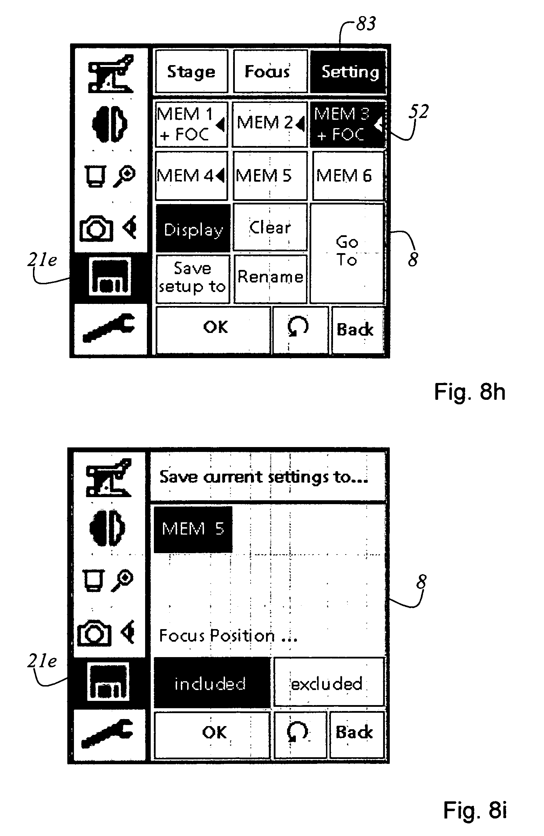

Fig. 8h ist eine Darstellung des Speichermenüs 21e für das Löschen und/oder Speichern von Systemeinstellungen. Zur Kennzeichnung der Aktivität ist der "Setting" Button 83 dunkel hinterlegt. Der Ablauf für das Wiederherstellen einer gespeicherten Systemeinstellung lässt sich wie folgt beschreiben. Zuerst gilt es, einen der mit *"MEM 1*" bis *"MEM 6"* bezeichneten Buttons zu wählen. Mit der Betätigung des "*Go To"* Button, wird die entsprechende Systemeinstellung durch das Drücken des "OK" Buttons bestätigt. Für das Löschen einer gespeicherten Systemeinstellung ist zunächst durch die Auswahl von mindestens einen mit *"MEM 1"* bis *"MEM 6"* bezeichneten Button die zu löschende Systemeinstellung zu wählen. Die Betätigung des *"Clear"* Buttons ermöglicht das Löschen, was durch Drücken des "OK" Buttons bestätigt wird. Der Ablauf für das Speichern der aktuellen Systemeinstellung erfolgt zuerst durch das Wählen eines der mit *"MEM 1"* bis *"MEM 6"* bezeichneten Buttons. Die Speicherung wird durch drücken des *"Save setup to"* Buttons ermöglicht und die Speicherung wird durch das Betätigen des "OK" Buttons bestätigt. Für die weitere Optionen, zusammen mit den Systemeinstellungen auch die aktuelle Fokusposition zu speichern, wird eine weitere Menüseite aufgerufen. Die Anzeige, ob mit den Systemeinstellungen auch die Focusposition gespeichert wurde, erfolgt beim jeweiligen *"MEM"* Button durch hinzufügten der Bezeichnung "+*FOC*". Ein Dreieck 52 erscheint auf dem Button der Speicherposition und blinkt zunächst 3 Sekunden, um den Speichervorgang zu visualisieren und um auf die Bedeutung des Dreiecks - Position belegt - hinzuweisen. Die Anzeige einer gespeicherten Systemeinstellung erfolgt durch Drücken des mit "Display" bezeichneten Buttons auf dem Display 8. Ein Umbenennen der Tasten für gespeicherte Systemeinstellungen erfolgt mit dem mit *"Rename"* Button.

Fig. 8i ist eine Darstellung des Speichermenüs für das Speichern der aktuellen Einstellungen. Der ausgewählte Speicherplatz wird angezeigt (sofern diese Speicherposition noch nicht belegt ist, ansonsten erfolgt eine Systemmeldung). Im vorliegenden Fall ist die mit *"MEM 5*" bezeichnete Speicherposition nicht belegt. Die Auswahl, ob die Fokusebene *"Focus Position",* d.h. die z-Koordinate, mitgespeichert werden soll oder nicht, kann durch die Button mit der Bezeichnung *"included"* oder *"excluded"* ausgewählt werden. Nach der Bestätigung des mit "OK" bezeichneten Buttons erfolgt der Rücksprung auf die vorhergehende Menüseite (siehe Fig. 8h) und das Dreieck hinter der entsprechenden Speicherposition blinkt 3 Sekunden. Auch hier können entsprechende Warnhinweise für den Benutzer ausgegeben werden, um die Belegung oder Nicht-Belegung anzuzeigen.

Fig. 8j ist eine Darstellung des Speichermenüs für den Schnellzugriff auf gespeicherte Systemeinstellungen. Hier werden die in der Speicherposition *"MEM* 5" hinterlegten Einstellungen auf dem Display 8 dargestellt. Ebenso erfolgt auf dem Display 8 ein Hinweis, ob die Fokusebene mit gespeichert wurde. Hierzu erscheint eine Anzeige 88, *"Focus-Position is not saved".*

Fig. 8k ist eine Darstellung des Speichermenüs 21e für das Umbenennen der Tasten für gespeicherte Systemeinstellungen. Das Umbenennen der Tasten für gespeicherte Systemeinstellungen kann mit Hilfe eines alpha-numerischen Tastaturblocks 87 (in Anlehnung an Telefontastatur) erfolgen.

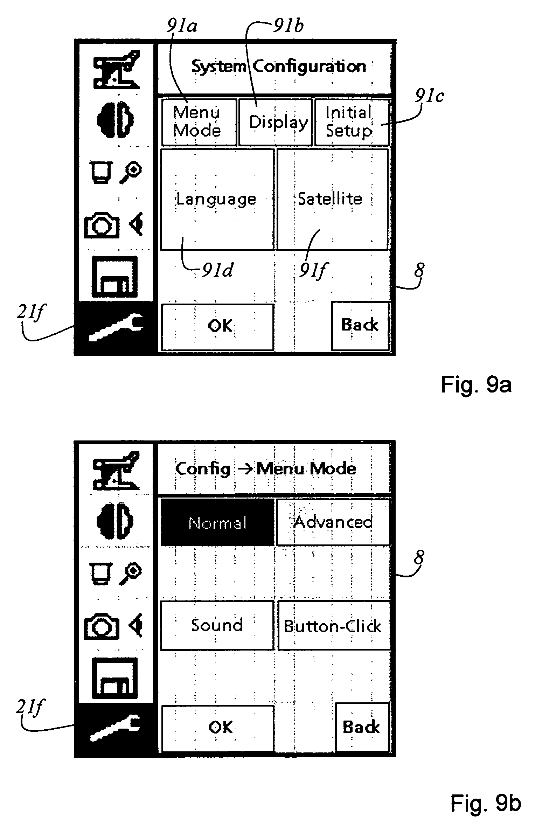

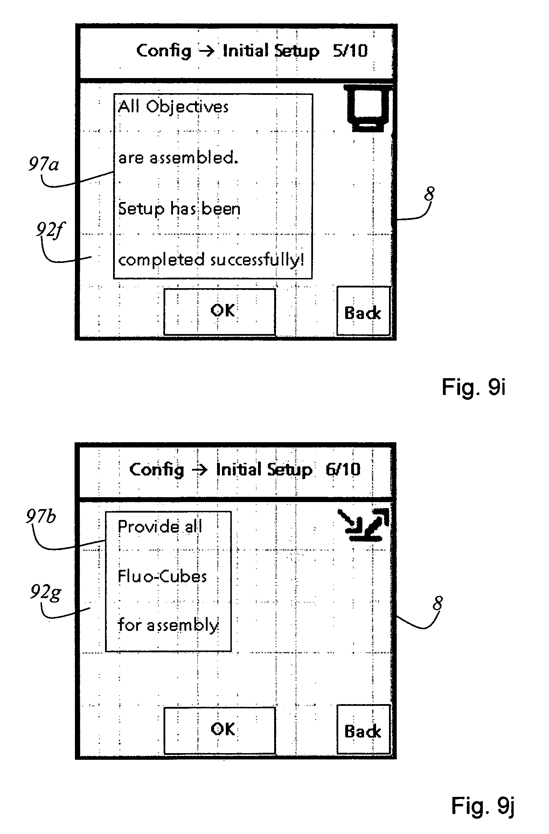

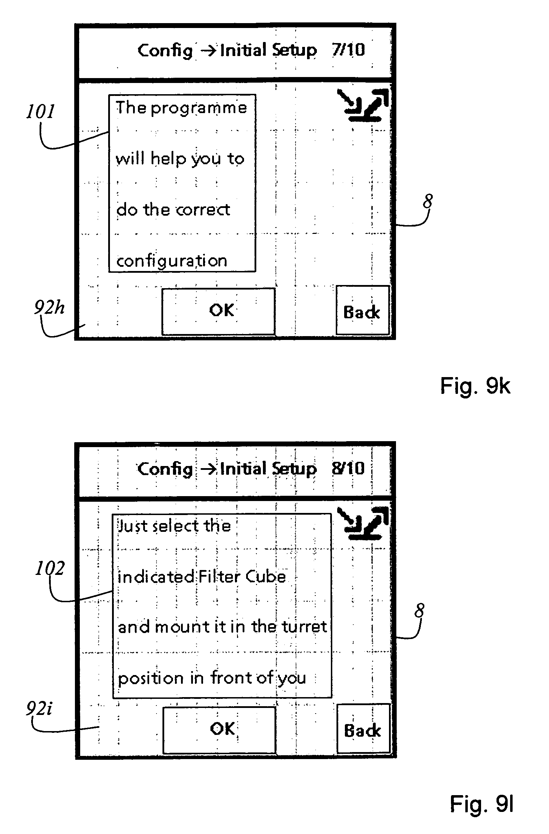

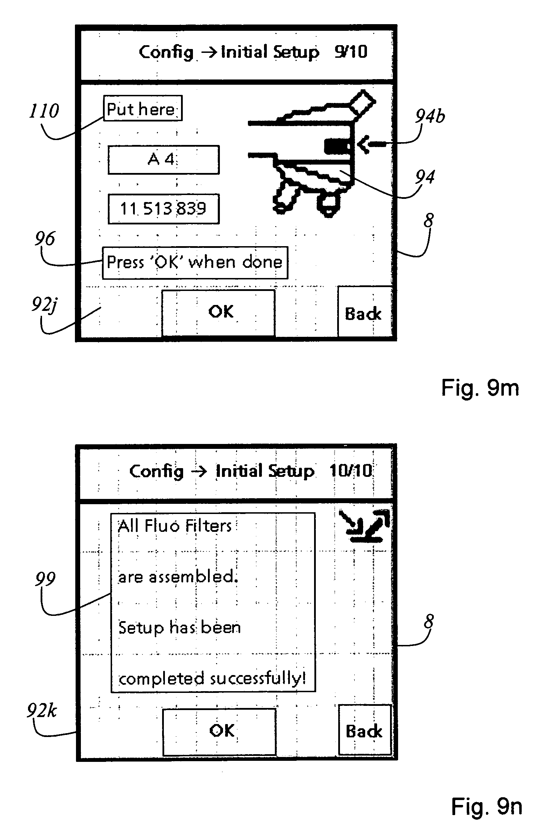

Fig. 9a zeigt eine Darstellung eines Konfigurationsmenüs 21f, mit dem die grundlegenden Geräte- und Systemeinstellungen vorgenommen werden können. Im Konfigurationsmenü 21f werden die grundlegenden Geräte- und Systemeinstellungen vorgenommen. Ein mit *"Menu Mode"* bezeichneter Button 91 a stellt als Interaktionsform den "Normalmodus" und den "Expertenmodus" zur Auswahl, wobei der Expertenmodus keine Bestätigung mit dem "OK" Button erforderlich macht. Kontrast und Helligkeit des Touchscreens werden über einen *"Display"* Button 91b geregelt. Ein *"Initial Setup"* Button 91c, der ebenso wie ein *"Language"* Button 91 d auch beim Einschalten kurz angeboten wird (siehe Fig. 3), bietet eine Benutzerführung bei der Erstmontage von Objektiven und Fluofiltern. Ein *"Satellite"* Button 91f erlaubt erweiterte Einstellungen für einen Bediensatellit, mit dem verschiedene Funktionen eines Mikroskopsystems gesteuert und aufgerufen werden können (z.B. verschiedene Optionen der Bildaufrichtung). Das Konfigurationsmenü ist durch einen stilisierten Schraubenschlüssel auf dem Funktionsschalter gekennzeichnet.

Fig. 9b ist eine Darstellung des Konfigurationsmenüs für Menüeinstellungen. Ein *"Normal"* Button steht für den Normalmodus und ein *"Advanced"* Button steht für den Experten-Modus (im Experten-Modus muss eine Funktionsauswahl nicht mehr mit dem "OK" Button bestätigt werden). Ferner erfolgt im Experten-Modus keine Anzeige von Hinweisseiten. Ein *"Sound*" Button ermöglicht das Ein/Aus für akustische Rückmeldung. Ein *"Button-Click"* Button ermöglicht das Ein/Aus für die Tastentöne.

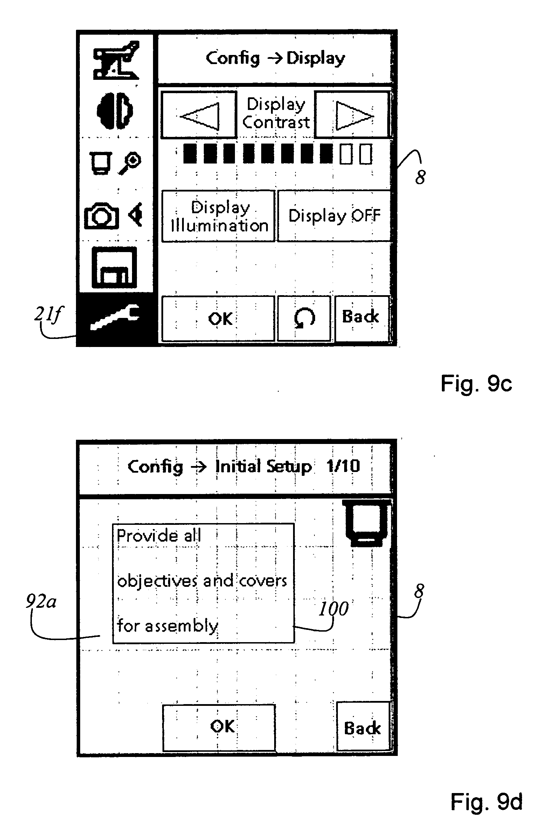

Fig. 9c ist eine Darstellung des Konfigurationsmenüs für Displayeinstellungen. Der Display-Kontrast kann über zwei Pfeiltasten eingestellt werden. Zwischen den Pfeiltasten ist mit *"Display Contrast"* deren Funktion dargestellt. Die Änderung erfolgt online und wird dem Benutzer über eine Skala angezeigt. Zum Speichern des gewählten Wertes muss der "OK" Button gedrückt werden. Ein *"Display Illumination"* Button ermöglicht das An-/Ausschalten der Hintergrundbeleuchtung. Mit dem *"Display OFF"* Button erfolgt das Deaktivieren des Displays 8 zur Vermeidung von Streulicht, insbesondere bei der Betrachtung in abgedunkelter Umgebung und bei der Anfertigung von Fotos.

Fig. 9d zeigt eine erste Darstellung 92a des Konfigurationsmenüs für die erste Inbetriebnahme des Mikroskops. Die Anzahl der Seiten des "Inital Setup" Menüs variieren in Abhängigkeit der Anzahl der Objektive bzw. der Fluo-Filter, die der Kunde zu montieren hat. Das Menü hilft bei der schrittweisen Montage der bei der Auslieferung beigelegten Komponenten. Zuerst wird die Eingangsseite zur Komplettierung des Systems bei der Inbetriebnahme dargestellt. Zunächst erfolgt die Montage der Objektive und ggf. der Abdeckung für den Objektivrevolver. Der Benutzter sieht am Display 8 eine Aufforderung 100, *"Bitte alle Objektive und Abdeckungen zur Monate bereitlegen".*

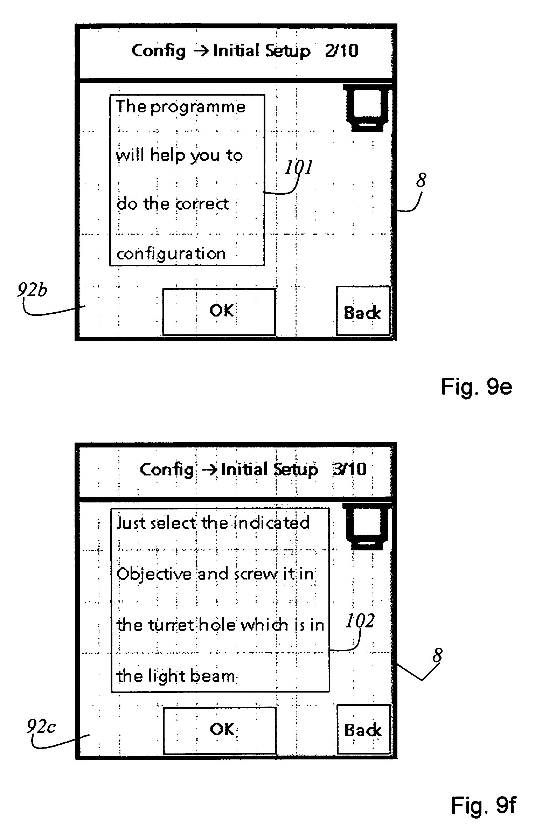

Fig. 9e ist eine zweite Darstellung 92b des Konfigurationsmenüs für die erste Inbetriebnahme des Mikroskops zum Montieren der Objektive. Auf dem Display 8 erhält der Benutzer eine Erläuterung 101 zur Vorgehensweise. Der Benutzer sieht am Display 8 die Erläuterung 101 *"Das Programm unterstützt Sie bei der korrekten Konfiguration".*

Fig. 9f ist eine dritte Darstellung 92c des Konfigurationsmenüs für die erste Inbetriebnahme des Mikroskops zum Montieren der Objektive. Der Benutzer erhält auf dem Display 8 eine Beschreibung 102 der auszuführenden Handlung. Auf deutsch lautet diese Beschreibung 102: *"Wählen Sie das angezeigte Objektiv aus und schrauben Sie* es *in die Revolveröffnung, die sich gerade im Strahlengang befindet".*

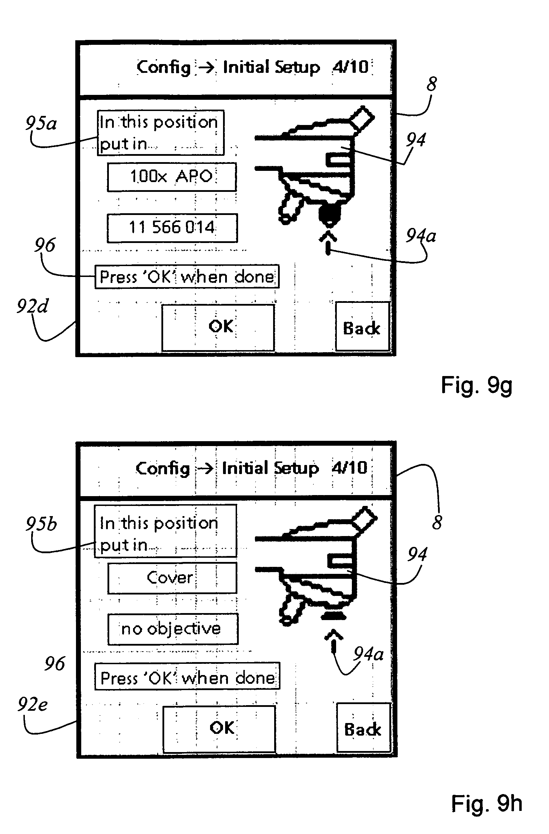

Fig. 9g ist eine vierte Darstellung des Konfigurationsmenüs 92d für die erste Inbetriebnahme des Mikroskops zum Montieren der Objektive. Der Benutzer erhält eine Handlungsanweisung mit Beschreibung der Position, in die ein bestimmtes Objektiv eingesetzt werden muss. Aus dem Display 8 wird ein stilisierter Mikroskoprevolver 94 dargestellt, bei dem das einzusetzende Objektiv mit einem Pfeil 94a markiert ist. Dabei wird auf dem Display die Anweisung 95a *"In diese Position das Objektiv einsetzen"* Das Weiterdrehen zur nächsten Position wird mit dem Drücken vom "OK" Button aktiviert und der Benutzer erhält eine Mitteilung 96a *"Drücken Sie OK wenn fertig".* Ebenso erfolgt auf den Display 8 die Anzeige der Bezeichnung und der Bestellnummer des zu montierenden Objektivtyps.

Fig. 9h ist eine Darstellung des Konfigurationsmenüs 92e für die erste Inbetriebnahme des Mikroskops zum Einsetzen von Abdeckungen. Die Abdeckungen werden an Positionen des Objektivrevolvers eingesetzt, an denen kein Objektiv eingesetzt wird. Der Benutzer erhält die Handlungsanweisung 95b mit Beschreibung, *"In dieser Position ist eine Abdeckung einzusetzen".* Das Weiterdrehen zur nächsten Position wird mit dem Drücken des "OK" Buttons aktiviert und der Benutzer erhält abermals die Mitteilung 96a *"Drücken Sie OK wenn Sie fertig sind'.* Die Anzeige der Bezeichnung und der Bestellnummer des Objektivs wird ersetzt durch den Hinweis, dass hier kein Objektiv einzusetzen ist.

Fig. 9i ist eine Darstellung des Konfigurationsmenüs 92f zum Abschluss der Objektivmontage. Der Benutzer erhält auf dem Display 8 die Meldung 97a "Alle Objektive sich eingebaut. Der Setup ist erfolgreich abgeschlossen".

Fig. 9j ist eine erste Darstellung des Konfigurationsmenüs 92g zur Montage der Fluo-Filter. Auf der Eingangsseite zur Komplettierung des Systems bei der Inbetriebnahme erhält der Benutzer den Hinweis 97b *"Bitte alle Fluo-Würfel für den Zusammenbau bereitstellen".*

Fig. 9k ist eine zweite Darstellung des Konfigurationsmenüs 92h zur Montage der Fluo-Filter. Auf dem Display 8 erhält der Benutzer eine Erläuterung zur Vorgehensweise. Der Benutzter sieht am Display 8 die Erläuterung 101 *"Das Programm unterstützt Sie bei der korrekten Konfiguration".*

Fig. 91 ist eine dritte Darstellung des Konfigurationsmenüs 92i zur Montage der Fluo-Filter. Der Benutzer erhält Beschreibung 102 der auszuführenden Handlung, die lautet: *"Wählen Sie den geeigneten Filterwürfel aus und setzen Sie ihn in die vor Ihnen befindliche Position des Filterrades ein."*

Fig. 9m ist eine vierte Darstellung des Konfigurationsmenüs 92j zur Montage der Fluo-Filter. Der Benutzer erhält eine Handlungsanweisung mit Beschreibung der Position, in die ein bestimmter Fluo-Filter eingesetzt werden muss. Aus dem Display 8 wird eine stilisierter Mikroskoprevolver 94 dargestellt, bei dem die Position, in die der Fluo-Filter einzusetzen ist, mit einem Pfeil 94b markiert ist. Dabei wird auf dem Display 8 die Anweisung 110 *"Hier einsetzen"* ausgegeben. Das Weiterdrehen zur nächsten Filter-Position wird mit dem Drücken vom "OK" Button aktiviert und der Benutzer erhält die Mitteilung 96 *"Drücken Sie OK wenn fertig".* Ebenso erfolgt auf den Display 8 die Anzeige der Bezeichnung und der Bestellnummer des zu montierenden Filtertyps.

Fig. 9n ist eine Darstellung des Konfigurationsmenüs 92k zum Abschluss der Montage der Fluo-Filter. Der Benutzer erhält auf dem Display 8 eine Meldung 99 *"Alle Fluo-Filter sind eingebaut. Der Setup ist erfolgreich abgeschlossen".*

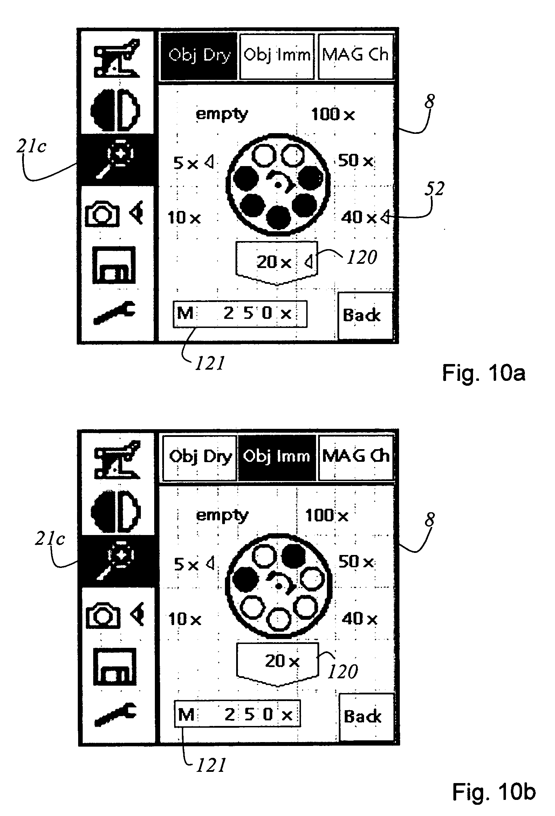

In Abweichung zu der vorstehenden Beschreibung müssen in der nachfolgenden Beschreibung auch die Menüseiten für ein teilautomatisiertes Mikroskopsystem offenbart werden. Fig. 10a ist eine Darstellung des Objektivmenüs 21c für Trocken-Objektive bei einem nicht motorisierten Objektivrevolver. Durch den nicht motorisierten Objektivrevolver muss sich das Objektivmenü entsprechend ändern, da eine Auswahl des gewünschten Objektivs nicht mehr am Touchscreen erfolgen kann. Im Display 8 ist ein Objektivrevolver als Kreis dargestellt innerhalb dessen kleinere Kreise die Positionen der Objektive darstellen. Zusätzlich zum Objektivrevolver ist auf dem Display 8 noch ein Hinweis gegeben, welche Objektive zur Verfügung stehen und zu welchen die aktuell gewählten Einstellungen kompatibel sind. Eine separate Darstellung für Trocken *"Obj Dry"* - und Immersionsobjektive *"Obj Imm"* bleibt erhalten. Die Menüseiten für den *"MAG-Changer"* (Nachvergrößerung) sind unverändert. Die Orientierung und Position der Objektive wird in der Darstellung am Display 8 nachempfunden. Beim Drehen des Objektivrevolvers wird auch die Position der Objektive in der Darstellung nachgeführt. Die Anzeige des im Lichtpfad befindlichen Objektivs erfolgt auf dem Display durch eine Einrahmung 120. Objektive, die für den Mikroskopiervorgang ohne Immersionsöl geeignet sind, sind in der Darstellung des Revolvers gekennzeichnet. Dreiecke 52 neben der Objektivbezeichnung dienen als Empfehlung für diejenigen Objektive, die mit den bisherigen Systemeinstellungen (z.B. Kontrastverfahren) kompatibel sind. Ebenso erfolgt auf dem Display 8 eine Anzeige 121 der aktuellen Gesamtvergrößerung.

Fig. 10b ist eine Darstellung des Objektivmenüs 21c für Immersions-Objektive *"Obj Imm"* bei nicht motorisierten Objektivrevolver. Objektive für Mikroskopiervorgang mit Immersionsöl sind in der Darstellung des Revolvers gekennzeichnet. Dreiecke dienen ebenfalls als Empfehlung zur Anzeige der Objektive, die mit bisherigen Systemeinstellungen (Kontrastverfahren) kompatibel sind. Kombi-Objektive werden sowohl im Menü für Trocken- als auch im Menü für Immersions-Objektive gekennzeichnet. Ebenso erfolgt auf dem Display 8 eine Anzeige 121 der aktuellen Gesamtvergrößerung.

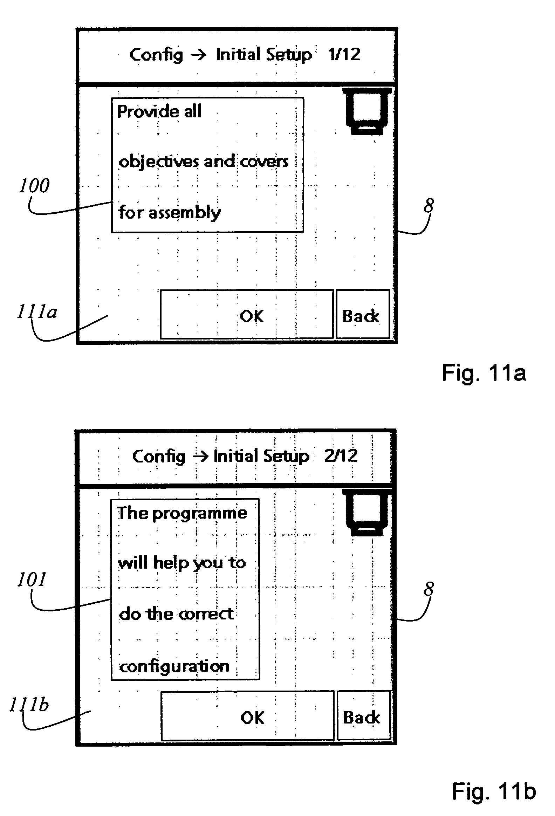

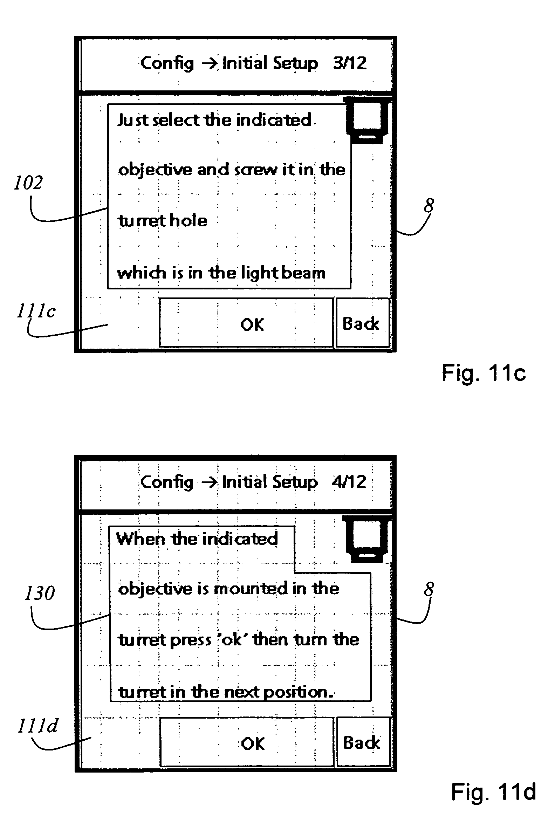

Fig. 11a ist eine erste Darstellung 111a des Konfigurationsmenüs für die erste Inbetriebnahme des Mikroskops zum Montieren der Objektive am nicht motorisierten Objektivrevolver. Auch bei den Menüseiten zur Erstinbetriebnahme muss eine andere Vorgehensweise gewählt werden als beim vollautomatisierten Mikroskopsystem. Das Einstellen einer Objektivrevolverposition zur Montage eines bestimmten Objektivs muss manuell ausgeführt werden. Die Anzahl der Seiten des *"Inital Setup"* Menüs variieren ebenfalls in Abhängigkeit der Anzahl der Objektive bzw. der Fluo-Filter, die der Kunde zu montieren hat. Die Menüseiten für die Montage der Fluo-Filter bleiben unverändert. Zunächst erfolgt die Montage der Objektive und ggf. der Abdeckung für den Objektivrevolver. Der Benutzter sieht am Display 8 die Aufforderung 100 *"Bitte alle Objektive und Abdeckungen für die Montage bereitlegen".*

Fig. 11b ist eine zweite Darstellung 111b des Konfigurationsmenüs für die erste Inbetriebnahme des Mikroskops zum Montieren der Objektive am nicht motorisierten Objektivrevolver. Auf dem Display 8 erhält der Benutzer eine Erläuterung zur Vorgehensweise. Der Benutzter sieht am Display 8 die Erläuterung 101 *"Das Programm unterstützt Sie bei der korrekten Konfiguration".*

Fig. 11c ist eine dritte Darstellung 111c des Konfigurationsmenüs für die erste Inbetriebnahme des Mikroskops zum Montieren der Objektive am nicht motorisierten Objektivrevolver; Der Benutzer erhält auf dem Display 8 eine Beschreibung 102 der auszuführenden Handlung. Auf deutsch lautet diese Beschreibung: *"Wählen Sie das angezeigte Objektiv aus und schrauben Sie es in die Revolveröffnung, die sich gerade im Strahlengang befindet".*

Fig. 11d ist eine vierte Darstellung 111d des Konfigurationsmenüs für die erste Inbetriebnahme des Mikroskops zum Montieren der Objektive am nicht motorisierten Objektivrevolver. Der Benutzer sieht eine Handlungsanweisung mit einer Beschreibung der Position, in die ein bestimmtes Objektiv eingesetzt werden muss. Die Handlungsanweisung 130 lautet auf deutsch: *"Ist das angezeigte Objektiv im Revolver befestigt, dann drücken Sie "OK" und drehen den Revolver in die nächste Position".* Das Weiterdrehen zur nächsten Position muss nach dem Drücken des "OK" Buttons manuell durchgeführt werden.

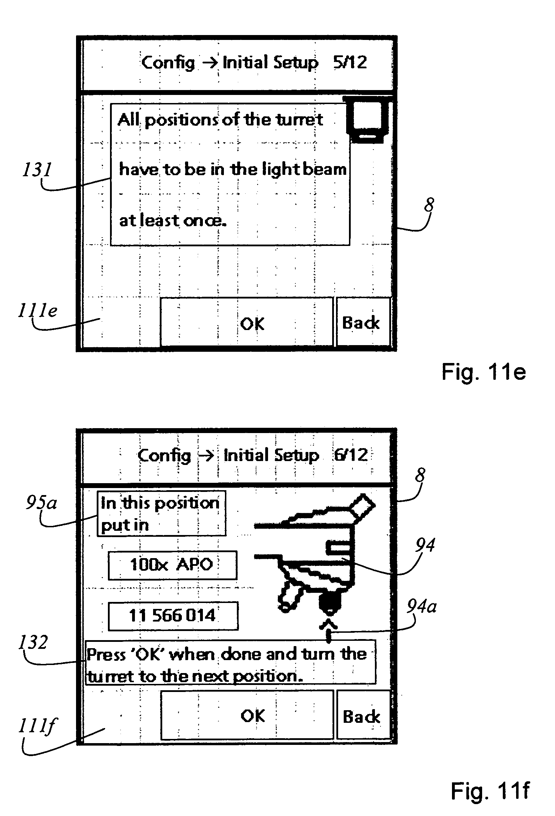

Fig. 11e ist eine fünfte Darstellung 111e des Konfigurationsmenüs für die erste Inbetriebnahme des Mikroskops zum Montieren der Objektive am nicht motorisierten Objektivrevolver. Eine weitere Information 131, "*Alle Positionen des Revolvers müssen zumindest ein mal im Strahlengang sein"* wird für den Benutzer auf dem Display 8 dargestellt. Für die korrekte Montage der Objektive muss sich jede Positionen des Objektivrevolvers ein mal im Strahlengang befinden. Nur dann kann das System für jede Position den entsprechende Hinweis zur Montage geben.

Fig. 11f ist eine sechste Darstellung 111f des Konfigurationsmenüs für die erste Inbetriebnahme des Mikroskops zum Montieren der Objektive am nicht motorisierten Objektivrevolver. Der Benutzer erhält eine Handlungsanweisung mit Beschreibung der Position, in die ein bestimmtes Objektiv eingesetzt werden muss. Aus dem Display 8 wird eine stilisierter Mikroskoprevolver 94 dargestellt, bei dem das einzusetzende Objektiv mit einem Pfeil 94a markiert ist. Dabei wird auf dem Display 8 die Anweisung 95a *"In diese Position das Objektiv einsetzen"* ausgegeben. Das Weiterdrehen zur nächsten Position wird mit dem Drücken vom "OK" Button aktiviert und der Benutzer erhält eine Mitteilung 132 *"Drücken Sie OK wenn Sie fertig sind und drehen Sie den Objektivrevolver in die nächste Position".* Ebenso erfolgt auf den Display 8 die Anzeige der Bezeichnung und der Bestellnummer des zu montierenden Objektivtyps.

Fig. 11g ist eine Darstellung 111g einer Warnung 133, wenn das Objektiv nicht korrekt in den nicht motorisierten Objektivrevolver eingesetzt ist. Ist die Position des Objektivrevolvers nicht korrekt ausgerichtet, wird der Benutzer aufgefordert, den Objektivrevolver bis zur nächsten Rastposition weiterzudrehen und korrekt auszurichten. Die Warnung 133 lautet: *"Die Position des Objektivrevolvers ist nicht genau eingestellt. Bitte passen sie die Position des Objektivrevolvers an".*

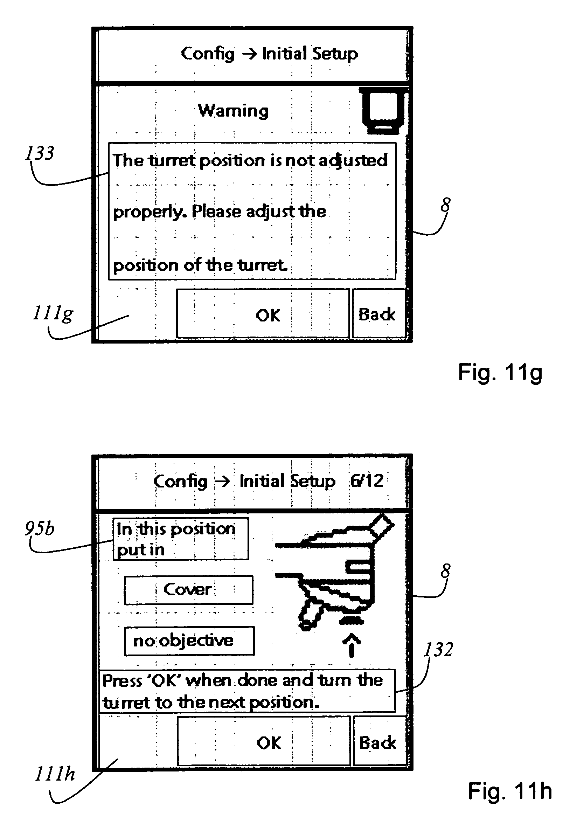

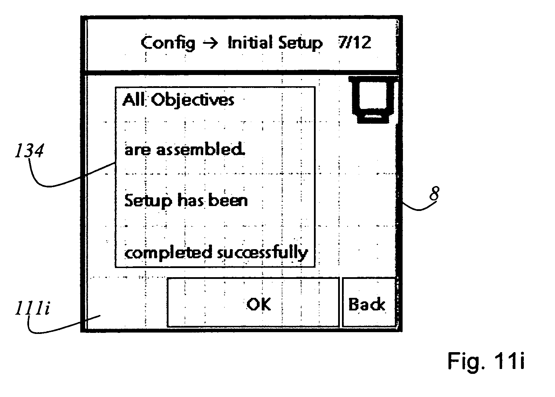

Fig. 11h ist eine Darstellung 111 h des Konfigurationsmenüs für die erste Inbetriebnahme des Mikroskops mit nicht motorisierten Objektivrevolver zum Einsetzen von Abdeckungen. Die Abdeckungen werden an Positionen des Objektivrevolvers eingesetzt, an denen kein Objektiv eingesetzt wird oder ist. Der Benutzer erhält die Handlungsanweisung 95b mit Beschreibung, *"In dieser Position ist eine Abdeckung einzusetzen".* Das Weiterdrehen zur nächsten Position wird mit dem Drücken vom "OK" Button aktiviert und der Benutzer erhält eine Mitteilung 132 *"Drücken Sie OK wenn Sie fertig sind und drehen Sie den Objektivrevolver in die nächste Position".* Die Anzeige der Bezeichnung und der Bestellnummer des Objektivs wird ersetzt durch den Hinweis, dass hier kein Objektiv einzusetzen ist.

Fig. 11i ist eine Darstellung 111i des Konfigurationsmenüs zum Abschluss der Objektivmontage am nicht motorisierten Objektivrevolver. Der Benutzer erhält auf dem Display 8 die Meldung 134 *"Alle Objektive sich eingebaut. Der Setup ist erfolgreich abgeschlossen".*

Die Erfindung wurde in Bezug auf eine besondere Ausführungsform beschrieben. Es ist einem Fachmann jedoch klar, das Abwandlungen und Modifikationen durchgeführt werden können, ohne den Schutzbereich der Ansprüche zu verlassen.

## Patentansprüche

1. Einrichtung zum Steuern von Funktionen eines Mikroskopsystems mit einem Stativbasisteil (3), **dadurch gekennzeichnet, dass** im Stativbasisteil (3) ein zentrales Display (8) integriert ist, über das alle Einstellungen des Mikroskopsystems durchführbar sind, der Benutzer über kompatible Einstellungen informierbar ist, der Benutzer gespeicherte Einstellungen des Mikroskopsystems aufruft und Warnmeldungen oder Systemhinweise erhält.

2. Einrichtung zum Steuern von Funktionen eines Mikroskopsystems nach Anspruch 1, **dadurch gekennzeichnet, dass** das Display (8) ein Bedienmenü (20) und einen Informationsmodus (25) hinterlegt hat, wobei das Bedienmenü (20) aus einem ersten Bereich (211), einem zweiten Bereich (221) und einem dritten Bereich (222) aufgebaut ist, und im ersten Bereich (211) ist ein Hauptmenü (21), im zweiten Bereich (221) ist ein Untermenü (22) und im dritten Bereich (222) sind Informations- und Aktionselemente darstellbar, wobei der dritte Bereich (222) auf je einer Seite vom Hauptmenü (21) und dem Untermenü (22) eingegrenzt ist, und wobei im Informationsmodus (25) das gesamte Display (8) zur Darstellung verwendbar ist.

3. Einrichtung zum Steuern von Funktionen eines Mikroskopsystems nach den Ansprüchen 1 und 2, **dadurch gekennzeichnet, dass** das Hauptmenü (21) aus mehreren Unterhauptmenüs (21a, 21b, 21c, ...) aufgebaut ist und dass je nach Auswahl des Unterhauptmenüs (21a, 21b, 21c, ...) durch den Benutzer jeweils ein dem ausgewählten Unterhauptmenü (21a, 21b, 21c,...) entsprechendes Untermenü (22) auf dem Display (8) darstellbar ist.

4. Einrichtung zum Steuern von Funktionen eines Mikroskopsystems nach Anspruch 1, **dadurch gekennzeichnet, dass** auf dem Display (8) eine Vielzahl von Funktionsschaltern von aufrufbaren Unterhauptmenüs (21a, 21b, 21c, ... ) darstellbar und aktivierbar ist, wobei im zweiten Bereich (221) mindesten eine Funktion des ausgewählten Unterhauptmenüs (21a, 21b, 21c, ... ) darstellbar und aktivierbar ist, und dass im dritten Bereich (222) die den ausgewählten Funktion des ausgewählten Unterhauptmenüs (21a, 21b, 21c, ... ) entsprechend, Daten und Einstellungen des Mikroskopsystems darstellbar sind.

5. Einrichtung zum Steuern von Funktionen eines Mikroskopsystems nach Anspruch 1, **dadurch gekennzeichnet, dass** das Hauptmenü aus sechs unterschiedlichen Funktionsschaltern aufgebaut ist, mit denen jeweils ein Unterhauptmenü (21a, 21b, 21c, 21d, 21e, 21f) des Hautmenüs (21) aufrufbar ist.

6. Software zum Steuern von Funktionen eines Mikroskopsystems, **dadurch gekennzeichnet, dass** ein Display (8) in einem Stativbasisteil (3) des Mikroskopsystems integriert ist, und dass die Software das Display (8) derart ansteuert, dass auf dem Display (8) ein Bedienmenü (20) und ein Informationsmodus (25) darstellbar sind, wobei das Bedienmenü (20) aus einem ersten Bereich (211), einem zweiten Bereich (221) und einem dritten Bereich (222) aufgebaut ist, und im ersten Bereich (211) ist ein Hauptmenü (21), im zweiten Bereich (221) ist ein Untermenü (22) und im dritten Bereich (222) sind Informations- und Aktionselemente darstellbar, wobei der dritte Bereich (222) auf je einer Seite vom Hauptmenü (21) und dem Untermenü (22) eingegrenzt ist, und wobei im Informationsmodus (25) das gesamte Display (8) zur Darstellung für Ausgaben verwendet wird.

7. Software nach Anspruch 6, **dadurch gekennzeichnet, dass** das Hauptmenü (21) aus mehreren Unterhauptmenüs (21a, 21b, 21c,...) aufgebaut ist und dass je nach Auswahl des Unterhauptmenüs (21a, 21b, 21c,...) durch den Benutzers, jeweils ein dem ausgewählten Unterhauptmenü (21a, 21b, 21c,...) entsprechendes Untermenü (22) auf dem Display (8) darstellbar ist.

8. Software nach Anspruch 6, **dadurch gekennzeichnet, dass** das Hauptmenü aus sechs unterschiedlichen Funktionsschaltern aufgebaut ist, mit denen jeweils ein Unterhauptmenü (21a, 21b, 21c, 21d, 21e, 21f) des Hautmenüs (21) aufrufbar ist.

9. Software nach Anspruch 6, **dadurch gekennzeichnet, dass** die Software in einem dem Mikroskopsystem zugeordneten Rechner implementiert ist, und dass das Mikroskopsystem mit mehreren Motoren und mehreren Sensoren oder Kodierungen versehen ist.

10. Software nach Anspruch 9, **dadurch gekennzeichnet, dass** die Software während einer Konfiguration die Ausstattung des Mikroskopsystems lernt.

11. Software nach Anspruch 9, **dadurch gekennzeichnet, dass** die Software die verschiedenen Motoren ansteuert und Daten über deren Stellung gewinnt.

12. Software nach einem der Ansprüche 9 bis 11, **dadurch gekennzeichnet, dass** über das Display (8) die Software dem Benutzer Hinweise darüber zur Verfügung stellt, welche Konfiguration, aus den vorhandenen, des Mikroskopsystems am besten für die gewünschte Untersuchung geeignet ist.

13. Software nach einem der Ansprüche 9 bis 12, **dadurch gekennzeichnet, dass** der Benutzer durch die Betätigung einer Funktionstaste auf dem Display (8) eine durch die Software abgespeicherte Einstellung wieder herstellen kann.

14. Software nach Anspruch 13, **dadurch gekennzeichnet, dass** die abgespeicherten Einstellungen, eine bestimmte z-Position des x/y Tisches mit einem bestimmten Objektiv oder eine bestimmte z-Position des x/y Tisches mit dem momentan verwendeten Objektiv oder eine bestimmte Position des x/y Tisches in der x/y Ebene sein können.

15. Software nach Anspruch 8, **dadurch gekennzeichnet, dass** ein erstes Unterhauptmenü (21a) Setupanzeige zur Verfügung stellt, über die der generelle Einstellungen des Mikroskopsystems dargestellt werden, um eine Information über den gesamten Betriebszustand des Mikroskopsystems zu erhalten.

16. Software nach Anspruch 8, **dadurch gekennzeichnet, dass** ein zweites Unterhauptmenü (21b) vorgesehen ist, das ein Kontrastmenü ist, im dem die vorhandenen Kontrastverfahren ausgewählt werden, und dass Dreiecke (52) im Display (8) den verschiedenen Anzeigen zugeordnet werden, die zu bisherigen Einstellungen ein kompatibles Kontrastverfahren darstellen.

17. Software nach Anspruch 8, **dadurch gekennzeichnet, dass** ein drittes Untermenü (21c) vorgesehen ist, das separate Untermenüs für Trockenobjektive (60a), Immersionsobjektive (60b) und für den Mag Changer (60c) umfasst und Dreiecke (52) zeigen diejenigen Objektive an, die mit den bisherigen Systemeinstellungen (z.B. Kontrastverfahren) kompatibel sind.

18. Software nach Anspruch 8, **dadurch gekennzeichnet, dass** ein viertes Unterhauptmenü (21d) vorgesehen ist, das ein Portmenü mit der Anzeige des aktuell eingestellten Betrachtungsausganges ist und eine Auswahl der vorhandenen Ausgänge ermöglicht.

19. Software nach Anspruch 8, **dadurch gekennzeichnet, dass** ein fünftes Unterhauptmenü (21e) vorgesehen ist, das ein Speichermenü ist und eine Vielzahl von Speicherfunktionen zum Löschen, Einstellen und Speichern der aktuellen Tischposition, mehreren Fokusebenen und mehreren Betriebszuständen erlaubt.

20. Software nach Anspruch 8, **dadurch gekennzeichnet, dass** ein sechstes Unterhauptmenü (21f) vorgesehen ist, das ein Konfigurationsmenü ist über das grundlegenden Geräte- und Systemeinstellungen vorgenommen werden können.
